# EUROPÄISCHE PATENTANMELDUNG

(11) **EP 4 084 350 A2**
(43) Veröffentlichungstag der Anmeldung: **02.11.2022**
(21) Anmeldenummer: 22171201.1
(22) Anmeldetag: 02.05.2022
(51) Int. Cl.: H04B 5/00, H04B 7/06, H04B 7/08, H04B 11/00, G01N 29/22, G01S 7/52, G01S 5/02

(54) **KOMBINIERTES BEAMFORMING VON ELEKTROMAGNETISCHEN UND AKUSTISCHEN WELLEN**

(30) Priorität: 30.04.2021 EP 21171480
(71) Anmelder: Hahn-Schickard-Gesellschaft für angewandte Forschung e.V., 78052 Villingen-Schwenningen (DE)
(72) Erfinder: Sikora, Axel, 79423 Heitersheim (DE); Dehé, Alfons, 72770 Reutlingen (DE)
(74) Vertreter: Hertin und Partner Rechts- und Patentanwälte PartG mbB

(57) **Zusammenfassung**

Die Erfindung betrifft in einem ersten Aspekt eine Vorrichtung zum Senden, Empfangen und Verarbeiten von elektromagnetischen und akustischen Signalen, wobei ein Senden und Empfangen der elektromagnetischen und/oder akustischen Signale durch die Vorrichtung mittels Beamforming erfolgt und wobei für das Beamforming eine kombinierte und/oder wechselseitige Verarbeitung elektromagnetischer und akustischer Signale vorgenommen wird.

In weiteren Aspekten betrifft die Erfindung ein System, welches zwei oder mehrerer dieser Vorrichtungen umfasst, sowie ein Verfahren für ein Beamforming mittels der Vorrichtung oder des Systems.

## Beschreibung

Die Erfindung betrifft in einem ersten Aspekt eine Vorrichtung zum Senden, Empfangen und Verarbeiten von elektromagnetischen und akustischen Signalen, wobei ein Senden und Empfangen der elektromagnetischen und/oder akustischen Signale durch die Vorrichtung mittels Beamforming erfolgt und wobei für das Beamforming eine kombinierte und/oder wechselseitige Verarbeitung elektromagnetischer und akustischer Signale vorgenommen wird.

In weiteren Aspekten betrifft die Erfindung ein System, welches zwei oder mehrerer dieser Vorrichtungen umfasst, sowie ein Verfahren für ein Beamforming mittels der Vorrichtung oder des Systems.

### Hintergrund und Stand der Technik

Die Erfindung betrifft das technische Gebiet des Beamformings (zu Deutsch "Strahlformung"). Mittels Beamforming können im Allgemeinen Signale bzw. Strahlung eine Richtwirkung erhalten, sodass sie gezielter empfangen und/oder versendet werden können.

Insbesondere lässt sich Beamforming an elektromagnetischen Wellen anwenden. Hierbei erfolgt eine Bündelung oder Ausrichtung von elektromagnetischen Wellen durch einen Sender und/oder auf einen Empfänger, vorzugsweise mittels entsprechender Anordnungen von Antennen. Beamforming für elektromagnetischen Wellen, beispielsweise zur drahtlosen Kommunikation, weist eine Reihe von Vorteilen auf. Es erweitert die Reichweite, ermöglicht stabilere Verbindungen, macht die Übertragung weniger anfällig gegenüber Funkstörern und sorgt für eine bessere Übertragungsleistung mit einer höheren Datenrate.

Aus dem Stand der Technik sind verschiedene Anordnungen und Möglichkeiten bekannt, Beamforming an elektromagnetischen Wellen anzuwenden. Eine verbreitete Technologie betrifft die Verwendung von Phased-Array-Antennen (vgl. u.a. Headland et al. (2018)).

Phased-Array-Antennen sind insbesondere Gruppenantennen, die einzelne Strahler umfassen, welche einzeln phasenverschoben werden können. Durch die Phasenverschiebung kann mittels Interferenz eine Bündelung der Strahlung erfolgen. Zudem kann bevorzugt auch jeder Strahler seine eigene Amplitude aufweisen. Oft lassen sich die Phasen der Strahler über integrierte Phasenverschieber regeln. In unerwünschten Richtungen kann durch Steuerung der Phase mittels destruktiver Interferenz die Strahlung gelöscht werden, während in erwünschten Richtungen die Strahlung mittels konstruktiver Interferenz verstärkt wird. Die physikalischen Prinzipien sind beim Empfangen analog.

Naqvi und Lim (2018) beschreibt ein Beamforming im Zusammenhang mit Millimeter-Wellen (MM-Wellen), insbesondere mittels Phased-Array-Antennen. MM-Wellen bieten großes Potential hinsichtlich 5G-Anwendungen. Verglichen mit 4G werden in 5G Datenraten von mehreren Gigabit pro Sekunde (Gbit/s), eine hohe Datenflussdichte, Verzögerungen nur im Millisekundenbereich ermöglicht und eine verbesserte spektrale Leistungsdichte erlangt. Es ist jedoch auch im Stand der Technik bekannt, dass der SINR-Wert (*signal-to-interference-plus-noise ratio*)*,* ein Parameter, der die Signalqualität mit Betrachtung von Störungen und Rauschen angibt, hierbei sinkt. Dies liegt an der Freiraumdämpfung (*free space path loss*) von elektromagnetischen Wellen in hohen Frequenzbereichen, insbesondere wenn die Wellenlänge im Millimeter-Bereich liegt.

Ebenso ist der Einsatz von Smart Reflektoren (u.a. Reconfigurable Intelligent Surfaces (RISs), Intelligent Reflecting Rurfaces (IRSs), Large Intelligent Metasurfaces) zum Beamforming bekannt. Smart Reflektoren bezeichnen reflektierende Oberflächen, welche wie reflektierende Antennen wirken und bevorzugt aus Metamaterialien hergestellt werden. Die optischen Eigenschaften der Metamaterialien insbesondere die Reflexionseigenschaften von Smart Reflektoren können vorteilhaft durch eine elektronische Ansteuerung reguliert werden. Bevorzugt wird ein Array aus Smart Reflektoren gebildet, wobei jeder einzelne Smart Reflektor eines Arrays elektromagnetische Signale in deren Phase, Amplitude, Frequenz und/oder Polarisation verändern kann. Analog zu Phased-Array-Antennen kann durch die Phasenverschiebung mittels Interferenz eine Bündelung und damit ein Beamforming der elektromagnetischen Signale erfolgen.

Das Beamforming an elektromagnetischen Wellen weist vielfältige Anwendungen auf. Jedoch ist allen Systemen gemein, die das Beamforming von elektromagnetischen Wellen nutzen, dass Mehrwegeausbreitungen stattfinden können. Diese treten insbesondere an einem Empfänger auf, wenn elektromagnetische Wellen eines Senders abgelenkt werden und über verschiedene Wege beim Empfänger ankommen. Das kann verschiedene Ursachen haben. Beispielsweise können die Signale reflektiert (z. B. an den Wänden von Häusern), gebrochen (z. B. an der Ionosphäre), gestreut (z. B. an kleinen Objekten wie Schildern) und/oder gebeugt werden (z. B. an den Umrissen von Häusern oder Gebäuden). Durch unterschiedlich lange Übertragungswege kann ein Signal mehrfach und zeitlich versetzt bei einem Empfänger ankommen, wobei einzelne Echosignale je nach Dämpfung und Weg unterschiedliche Amplituden und Laufzeiten aufweisen können. Insbesondere ist es auch möglich, dass die Echosignale stärkere Amplituden aufweisen als die unmittelbar übertragenen Signale, welche eine Zuordnung der Signalwege erschweren.

Aufgrund der unterschiedlich zurückgelegten Strecken, die je eine Verzögerung der Signale bewirken, wirkt sich die Mehrwegeausbreitung negativ auf die Übertragung aus und erschwert eine Lokalisation und mithin örtliche Präzision beim Beamforming.

Auch in anderen Gebieten ist der Einsatz von Beamforming bekannt. Insbesondere lässt sich Beamforming an Schallwellen anwenden, um zielgerichtet akustische Signale zu empfangen und/oder zu senden. In Bezug auf ein akustisches Beamforming bestehen weitreichende Anwendungsmöglichkeiten. Mittels Beamforming beim Empfangen akustischer Signale können beispielsweise ortsaufgelöst akustische zwei- oder dreidimensionale Schallaufnahmen (Fotos oder Videos) erstellt werden, welche ein leistungsstarkes Werkzeug für die Klanganalyse und die Geräuschreduzierung darstellt. Hierbei können mehrere Schallquellen lokalisiert und voneinander separiert werden. Zudem birgt das akustische Beamforming ein hohes Potential in Bezug auf die Optimierung der Klangübertragung in geschlossenen wie offenen Räumen, beispielsweise Konzertsälen oder Stadien.

Beim akustischen Beamforming gelten ähnliche physikalische Prinzipien wie für das Beamforming von elektromagnetischen Wellen. Dies soll im Folgenden durch ein zielgerichtetes Empfangen von Schallwellen über Mikrofone erläutert werden. Analoge Zusammenhänge gelten für ein zielgerichtetes Aussenden von Schallwellen durch Lautsprecher mittels Beamforming.

Eine sehr allgemeine Form des Beamformings, insbesondere im Zusammenhang mit Schallwellen, ist das Filter-and-Sum-Beamforming. Hierbei werden beim Empfang zunächst die Mikrofonsignale durch individuelle Filter geführt und im Anschluss die Ausgangssignale aller Filter aufsummiert. Werden Mikrofone mit omnidirektionaler Wirkung, sogenannte Kugelmikrofone, betrachtet, so ergibt sich ein Beamforming der Schallwellen durch die Arrayanordnung, d. h. durch die Geometrie der Mikrofone und der nachgeschalteten Filter. Der Filter kann beispielsweise ein digitaler Filter sein, der bestimmte Frequenzen, Amplituden, Phasen etc. durchlassen, hemmen, verschieben und/oder steuern kann. Vorrichtungen und Verfahren mit analogen Filtern sind auch möglich.

Sollen statt omnidirektionaler Mikrofone solche mit einer Richtwirkung eingesetzt werden, so muss zunächst das Ausgangssignal eines solchen Mikrofons berechnet werden. Dabei bezeichnen Mikrofone mit einer Richtwirkung bevorzugt jene Mikrofone, bei denen die Stärke des empfangenen Schalls, bezogen auf Empfindlichkeit und/oder Intensität, abhängig vom Winkel des eingetroffenen Schalls ist.

Ein weiteres bekanntes Verfahren des Beamformings ist das Delay-and-Sum-Beamforming. Hier wird dem Signal eines jeden Mikrofons, abhängig von dessen Position und der gewünschten Empfangsrichtung, die auch als Steering Direction bezeichnet wird, eine Laufzeit hinzugefügt. Diese ist jeweils bevorzugt so bemessen, dass die Laufzeitunterschiede, die ein Signal aus der bevorzugten Empfangsrichtung beim Eintreffen an den einzelnen Mikrofonen hat, ausgeglichen werden. Anschließend werden die so korrigierten Signale aufaddiert. Dies bewirkt, dass alle Signale mit einer Anzahl der Mikrofone entsprechende Verstärkung des gewünschten Signals nun wieder in Phase sind. Trifft ein Signal aus einer anderen Richtung ein, so werden die Laufzeitunterschiede nicht mehr in dieser Weise ideal ausgeglichen und die zur Addition gelangenden Einzelsignale sind gegeneinander zeitlich verschoben, also nicht mehr in Phase. Es kommt somit zu einer teilweisen bis vollständigen gegenseitigen Auslöschung der Signale und das Ausgangssignal wird abgeschwächt oder sogar zu Null. Eine Laufzeitkorrektur ergibt sich aus dem Wegunterschied, den Schall aus der bevorzugten Empfangsrichtung nach dem Eintreten am n-ten Mikrofon zusätzlich noch bis zum letzten Mikrofon zurückzulegen hat. Die Laufzeitkorrektur kann mit einem Filter mit entsprechender Gruppenlaufzeit erfolgen. Das Delay-and-Sum-Beamforming stellt somit einen Spezialfall des Filter-and-Sum-Beamformings dar. Analoge Gesetzmäßigkeiten gelten beim Senden von Schallwellen durch Lautsprecher.

Im Stand der Technik wird eine Reihe von Vorschlägen für Vorrichtungen und Verfahren unterbreitet, um Beamforming an Schallwellen zu erzeugen und zu nutzen. Hierbei sind Arrayanordnungen aus Mikrofonen (zum Empfangen) und/oder Lautsprechern (zum Senden) verbreitet. Durch die Arrays werden Schallfelder räumlich abgetastet und Richtungsinformationen verarbeitet.

Lewis (2012) offenbart zwei grundlegende Arrayanordnungen von Mikrofonen, die Beamforming an akustischen Signalen ausüben. Bei sogenannten Broadside-Arrays wird eine Gerade aus Mikrofonen derart ausgestaltet, dass die akustischen Signale senkrecht auf das Array treffen. Bei Endfire-Arrays sind Mikrofone ebenfalls linear ausgebildet, jedoch treffen die akustischen Signale das Array "in-line". Für die Arrayausgestaltungen existieren verschiedene Vor- und Nachteile. Während beispielsweise Broadside-Arrays sehr einfach zu implementieren sind, können Alias-Effekte auftreten, welche die Wellenformen im Vergleich zum Ursprungssignal verfälschen. Durch Verringerung der Abstände der Mikrofone können die Alias-Effekte geringgehalten werden. Bei Endfire-Arrays ist die Ausgestaltung kompakter, aber die Signalverarbeitung aufwendiger.

Im Stand der Technik werden insbesondere auch Vorrichtungen offenbart, die sich für das Beamforming von Schallwellen der MEMS-Technologie bedienen (mikroelektromechanisches System, *engl. micro electro mechanical system*)*.*

Beispielsweise wird in Izquierdo et al. (2016) ein Verfahren vorgestellt, um mittels Beamforming akustische Bilder zu erzeugen. Dabei sind MEMS-Mikrofone planar und gitterförmig auf einem Modul angeordnet. Der Einsatz mehrerer solcher Module, die in unterschiedlichen Geometrien aufgebaut werden, wird ebenfalls offenbart, um die Richtcharakteristik in bestimmte Richtungen zu erhöhen oder um bestimmte Muster akustischer Bilder zu erzeugen.

In Anzinger et al. (2020) werden eindimensionale Arrays aus CMUTs (*engl. Capacitive micromachined ultrasonic transducers*) beschrieben, die insbesondere zur Lokalisierung von Objekten dienen sollen. CMUTs sind mikromechanische Strukturen, die akustische Signale im Ultraschallbereich erzeugen und empfangen können. Die CMUTs in Anzinger et al. (2020) umfassen einen ASIC (anwendungsspezifische Schaltung, *engl. application specific integrated circuit*) und ein MEMS-Die (ein Die bezeichnet bevorzugt ein ungehäustes Stück eines Wafers), die sich innerhalb eines Gehäuses befinden, auf einer Leiterplatte integriert sind und einen Soundport umfassen. Es werden Arrays aus verschiedenen CMUTs untersucht, die je eine unterschiedliche Richtcharakteristik (*engl. directivity*) der akustischen Signale zur Folge haben. Das Messprinzip für die Lokalisation basiert auf der pulsierten Echomethode (*engl. pulse-echo based principle*)*.* Dabei werden kurze Ultraschallpulse versendet und der ToF (*time of flight*) bis zum Empfang eines Echos berechnet.

In Papež und Vlček (2018) werden das Delay-and-Sum-Beamforming und ein weiteres Beamforming-Verfahren, das MVDR-Beamforming (*Minium Variance Distortionless Response* Beamforming) durch MEMS-Mikrofone simuliert. Die Simulationen zeigen, dass MEMS-Mikrofone akkurate Ergebnisse für das Beamforming liefern, insbesondere hinsichtlich der Separierung mehrerer Schallquellen.

Mittels Beamforming von Schallwellen können akustische Fotos und Videos in 2D und 3D erstellt werden, welche ein leistungsstarkes Werkzeug für die Klanganalyse, die Geräuschreduzierung und das Qualitätsmanagement einer gewissen Geräuschkulisse darstellt. Insbesondere können dadurch mehrere Schallquellen lokalisiert und voneinander separiert werden.

Jedoch ist allen akustischen Systemen, die Beamforming nutzen, gemein, dass hierbei nur eine grobe Messung der Lokalisation möglich ist. Dies hat vielseitige Gründe (vgl. Birth (2016)). Beispielsweise kann ein Sprachsignal selbst Probleme verursachen. Ein Sprachsignal wird durch eine große Bandbreite von 70 Hz bis 4 kHz für Telefonanwendungen und breitbandige Verwendungen bis hin zu 10 kHz charakterisiert. Durch die Variation der Sprachintensität kann das SNR-Verhältnis (*Signal-To-Noise*) im Zeitverlauf schwanken. Darüber hinaus können Amplituden- und Phasenfehler auftreten, welche durch endliche Bandbreiten, aber auch durch äußere Gegebenheiten (Raumtemperatur, Luftfeuchtigkeit etc.) bedingt sind. Weiterhin sind auch bei Schallwellen Reflexionen und hinzukommende Rauschquellen von Bedeutung. Die räumlichen Gegebenheiten haben hierbei einen Einfluss auf die Möglichkeiten der Lokalisation, wobei eine hohe Anzahl von schallharten Oberflächen zu einer Vermehrung von Reflexionen führt.

Beamforming als Signalverarbeitungstechnologie ist somit sowohl für elektromagnetische Signale als auch für akustische Signale einzeln betrachtet bekannt und eignet sich für eine Bündelung der Signalarten.

Im Stand der Technik sind ebenfalls Vorrichtungen bzw. Systeme bekannt, die elektromagnetische Signale und akustische Signale gemeinsam nutzen, insbesondere für Lokalisationszwecke.

In US 2017/208565 A1 wird ein System zur Positionsbestimmung und Distanzmessung offenbart, welches einen Sender und einen Empfänger aufweist. Dazu wird vorzugsweise vom Sender ein Radiosignal ausgesendet und vom Empfänger empfangen und die Ankunftszeit gespeichert. Daraufhin wird vom Sender ein akustisches Signal versendet und vom Empfänger empfangen, wobei auch hierbei die Ankunftszeit gespeichert wird. Auf Basis der beiden Ankunftszeiten des Radiosignals und des akustischen Signals erfolgt eine Distanzmessung. Ein Beamforming der beiden Signalarten wird nicht offenbart.

In der US 2016/202343 A1 wird ein Endgerät offenbart, welches eine Empfangseinheit aufweist. Diese kann eine erste und zweite elektromagnetische Welle sowie eine erste und zweite Schallwelle einer ersten und zweiten Funkbake empfangen. Ein Prozessor ist dazu konfiguriert, daraufhin die erste und zweite Frequenz der entsprechenden ersten und zweiten elektromagnetischen Welle zu bestimmen. Auf deren Grundlage werden jeweils die Übertragungsfrequenzen der ersten und zweiten Schallwellen bestimmt werden und eine Lokalisierung vorgenommen.

Die US 2015/247916 A1 offenbart ein Positionssystem umfassend mehrere Ankerstationen und eine Mobilstation, die beispielsweise durch ein mobiles Endgerät gegeben sein kann. Die Ankerstationen emittieren zeitgleich ein Radiosignal und ein akustisches Signal, welche von der Mobilstation empfangen werden. Durch Einbeziehung der unterschiedlichen Empfangszeiten wird eine Position bzw. ein Abstand zwischen der Ankerstation und der Mobilstation berechnet.

In der US 10 908 280 B2 wird ein System umfassend eine Sendeeinrichtung und ein mobiles Endgerät beschrieben. Hierzu werden akustische Signale und daraufhin Beacondaten (*engl.: beacon data*) von der elektromagnetischen Sendeeinrichtung emittiert. Zur Positionsbestimmung des mobilen Endgeräts können sowohl die akustischen Signale als auch die Beacondaten genutzt werden.

Die bekannten Systeme nutzen zwar elektromagnetische Signale und akustische Signale, offenbaren jedoch kein Beamforming der jeweiligen Signalarten.

Lediglich vereinzelt sind im Stand der Technik Vorrichtungen bekannt, welche ein Beamforming einer oder beider Signalarten nutzen.

Beispielweise wird in der US 9 689 958 B1 ein System zur Positionsbestimmung offenbart, insbesondere um eine Winkelbestimmung zwischen einem Endgerät und einem Positionsknoten vorzunehmen. Dazu werden akustische Signale zwischen den Geräten ausgetauscht. Ein Beamforming wird hinsichtlich akustischer Signale beschrieben, um empfangene akustische Signale zu verstärken. Ein Beamforming der Radiosignale wird nicht offenbart.

In der US 2014/253389 A1 ein Verfahren zur Distanzbestimmung zwischen WiFi-Geräten unter Ausnutzung von WiFi- und Ultraschallsignalen offenbart. Dabei wirken sich das Aussenden und Empfangen von Ultraschallsignalen unterstützend zur Distanzmessung bzw. Positionsbestimmung aus, was dahingehend als vorteilhaft beschrieben wird, dass die Sensitivität erhöht wird, da beide Signalarten nicht miteinander korrelieren. So kann eine aus Ultraschall basierte RTT-Messung (engl.: round trip time) zur Verbesserung der RTT-Messung oder FTOA-Messung (engl.: first time of arrival) von Wifi-Signalen dienen. Die Ultraschall-basierte RTT-Messung kann auch für eine Verbesserung der WiFi-basierten RSSI-Messung dienen (*engl.: received signal strength indicator*)*.* Dazu wird bevorzugt ein WiFi-Signal zeitgleich mit einem Ultraschallsignal emittiert. Vereinzelt wird auch ein Beamforming der Ultraschallsignale und der WiFi-Signale offenbart.

Allerdings besteht weiterhin ein Potential an Verbesserung in Bezug auf Präzision sowie Leistungsfähigkeit eines Beamforming unter Nutzung elektromagnetischer und akustischer Signale.

Im Lichte des Standes der Technik besteht mithin ein Bedarf alternativer oder verbesserter Verfahren und/oder Vorrichtungen zum Beamforming und zur gemeinsamen Auswertung der Lokalisierungsschätzung unter Nutzung elektromagnetischer und akustischer Signale.

### Aufgabe der Erfindung

Aufgabe der Erfindung war es, die Nachteile des Standes der Technik zu beseitigen und eine verbesserte Vorrichtung und/oder Verfahren zum Beamforming anzubieten. Insbesondere war es eine Aufgabe der Erfindung, eine Verbesserung der herkömmlichen Verfahren und/oder Vorrichtungen hinsichtlich der Lokalisation bereitzustellen.

### Zusammenfassung der Erfindung

Die erfindungsgemäße Aufgabe wird gelöst durch die Merkmale der unabhängigen Ansprüche. Vorteilhafte Ausgestaltungen der Erfindungen sind in den abhängigen Ansprüchen beschrieben.

In einer bevorzugten Ausführungsform betrifft die Erfindung eine Vorrichtung zum Senden, Empfangen und Verarbeiten von elektromagnetischen und akustischen Signalen umfassend einen ersten Antennenarray zum Senden von elektromagnetischen Signalen, einen zweiten Antennenarray zum Empfangen von elektromagnetischen Signalen, einen Mikrofonarray zum Empfangen von akustischen Signalen, einen Lautsprecherarray zum Senden von akustischen Signalen und einer Recheneinheit, dadurch gekennzeichnet, dass die Recheneinheit dazu konfiguriert ist, dass ein Senden und Empfangen der elektromagnetischen und/oder akustischen Signale durch die Vorrichtung mittels Beamforming erfolgt, wobei bevorzugt für das Beamforming eine kombinierte und/oder wechselseitige Verarbeitung elektromagnetischer und akustischer Signale vorgenommen wird.

Im Sinne der Erfindung meint eine kombinierte und/oder wechselseitige Verarbeitung elektromagnetischer und akustischer Signale für das Beamforming bevorzugt, dass
- ein Senden und/oder Empfangen von elektromagnetischen Signalen durch die Vorrichtung mittels Beamforming erfolgt, wobei für das Beamforming eine Verarbeitung von empfangenen akustischen Signalen vorgenommen wird,
- ein Senden und/oder Empfangen von akustischen Signalen durch die Vorrichtung mittels Beamforming erfolgt, wobei für das Beamforming eine Verarbeitung von empfangenen elektromagnetischen Signalen vorgenommen wird und/oder
- das Senden und/oder Empfangen von elektromagnetischen und/oder akustischen Signalen mittels Beamforming erfolgt, wobei für das Beamforming eine Verarbeitung von empfangenen akustischen und elektromagnetischen Signalen vorgenommen wird.

Ein Senden und Empfangen von elektromagnetischen und/oder akustischen Signalen durch eine kombinierte und/oder wechselseitige Verarbeitung elektromagnetischer und akustischer Signale bringt diverse Vorteile mit sich, die im Folgenden näher ausgeführt werden.

Hinsichtlich der Lokalisierung liefert die erfindungsgemäße Vorrichtung unter einer kombinierten und/oder wechselseitigen Verarbeitung elektromagnetischer und akustischer Signale vorteilhafterweise eine höhere Genauigkeit. Dies ist damit begründet, dass beide Signalarten für die Positionsbestimmung verwendet werden. Im Stand der Technik dagegen war stets nur ein Beamforming für nur eine Signalart bekannt, beispielsweise ein Beamforming von akustischen Signalen oder von elektromagnetischen Signalen. Wie eingangs erläutert, erlauben akustische Signale insbesondere eine gute Grobschätzung der Position, während elektromagnetische Signale vor allem für eine Feinschätzung geeignet sind.

Bei akustischen Signalen in akustischen Kanälen kann es zu Verrauschungen kommen. Dies kann viele verschiedene Ursachen haben und geht mit diversen Rauscharten einher. Bei elektromagnetischen Signalen besteht insbesondere das Problem von Mehrwegeausbreitungen.

Weitere Probleme hinsichtlich der Übertragung von elektromagnetischen Signalen sind verrauschte Funkkanäle über ISM-Bänder (*engl. Industrial, Scientific and Medical Band*) für WLAN oder Bluetooth. Viele Systeme nutzen diese Frequenzbänder, sodass es zu Einschränkungen der Signalqualität kommen kann.

Erfindungsgemäß wurde erkannt, dass die vermeintlichen Nachteile der einzelnen Signalarten ausgenutzt werden können, um durch einen Kombinationsansatz ein verbessertes Beamforming zu erhalten. Insbesondere werden durch die erfindungsgemäße Vorrichtung akustische und elektromagnetische Signale verarbeitet, sodass eine noch genauere Lokalisierung ermöglicht wird. Beispielsweise können durch eine Grobschätzung der akustischen Signale die Antennenarrays für die elektromagnetischen Signale auf die Quelle gerichtet werden, wobei die Verarbeitung durch die akustischen Signale bedingt durch die grobe Schätzung eine hohe Fehlertoleranz hinsichtlich der Positionsbestimmung aufweist.

Die Antennenarrays, die für das Beamforming der elektromagnetischen Signale verantwortlich sind, können anschließend auf einen Bereich ausgerichtet werden, welcher durch die akustischen Signale zunächst (grob) ermittelt wurde. Durch das Verarbeiten der hochauflösenden elektromagnetischen Signale wird die Fehlertoleranz nochmals verringert und die Position genauer bestimmt. Es stellt hierbei eine Abkehr vom Stand der Technik dar, dass beide Signalarten, also elektromagnetische und akustische Signale, miteinander in Kombination zur Positionsbestimmung verwendet werden. Durch die Verwendung beider Signalarten ist es mithin möglich, die Position mit einer höheren Genauigkeit zu bestimmen, wobei eine Grobschätzung durch die akustischen Signale und Feinschätzung durch die elektromagnetischen Signale gleichermaßen genutzt wird.

Ein weiterer Vorteil ist es, dass die erfindungsgemäße Vorrichtung die Rechenleistung erheblich reduzieren kann, insbesondere bei einer Positionsbestimmung und/oder Optimierung der Strahlausrichtung.

Beispielsweise kann das Lausprecherarray automatisch auf die durch elektromagnetische Antennenarrays berechnete Position ausgerichtet werden. Somit müssen durch das Mikrofonarray nicht weitere akustische Signale aufgenommen und verarbeitet werden. Stattdessen kann das Lautsprecherarray direkt auf die Quelle durch die elektromagnetischen Signale ausgerichtet werden. Umgekehrt kann auch das Mikrofonarray die Grundlage für das Beamforming der elektromagnetischen Signale darstellen. Durch geeignete Algorithmen können somit Synergien genutzt werden, um die erforderliche Rechenleistung für das Beamforming zu optimieren.

Ein zusätzlicher Vorteil der erfindungsgemäßen Vorrichtung ist es, dass sie besonders gezielt zur Übertragung von Stereoeffekten genutzt werden kann. Ein Stereoeffekt bewirkt einen räumlichen Schalleindruck beim natürlichen Hören bei zwei oder mehr Schallquellen. Vorteilhafterweise können mit der erfindungsgemäßen Vorrichtung besonders präzise Stereoeffekte übertragen werden, wobei sowohl auf die elektromagnetischen Antennenarrays als auch die Lautsprecher bzw. Mikrofonarrays zurückgegriffen werden kann.

Durch das Beamforming von akustischen Signalen beim Senden mithilfe des Lautsprecherarrays kann zudem bevorzugt auf die Parallaxe beider Ohren gezielt gesendet werden. Währenddessen bleibt ein Empfang bzw. ein Hören (mittels der Mikrofonarrays) auf den Mund fokussiert. Dies ist von besonderem Vorteil, da eine Trennschärfe zwischen gleichzeitigem Senden und Empfangen von akustischen Signalen möglich wird. Gleichzeitig können die elektromagnetischen Arrays genutzt werden, um die Position des Sprechers - beispielsweise anhand eines mitgeführten Mobilgerätes oder Reflektoren präziser zu bestimmen - oder einen Datenaustausch mit einem mitgeführten Mobilgerät durch das Beamforming zu optimieren.

Insbesondere in Großraumbüros oder anderen Orten, an denen sich mehrere Menschen gleichzeitig aufhalten und kommunizieren, kann die erfindungsgemäße Vorrichtung für einen Einsatz als Freisprechanlage sehr vorteilhaft sein. Mittels der erfindungsgemäßen Vorrichtung ist es möglich, dass sich der Nutzer beispielsweise in einem Großraumbüro frei bewegen kann, während dieser eine durch die Vorrichtung unterstütztes Telefongespräch mit einer ausgezeichneten Tonqualität führt. Die Audiosignale für das Hören und Sprechen werden mittels Beamforming direkt an den Nutzer geleitet. Eine umständliche Handhabung von Headsets oder des Mobilgerätes ist nicht notwendig.

Ein denkbares Szenario ist es, dass ein Nutzer einen Wifi-Tag bei sich trägt, sodass der Nutzer während seiner Bewegung im Großraumbüro von der Vorrichtung lokalisiert werden. Die Antennenarrays können hierbei zum Senden und zum Empfangen von elektromagnetischen Signalen verwendet werden und somit eine ständige genaue Positionsbestimmung des Nutzers durchführen. Entsprechend richten sich das Lautsprecherarray und das Mikrofonarray an den Mund und/oder an die Ohren des Nutzers. Durch das Beamforming von akustischen Signalen des Lautsprecherarrays kann der Schall an die Ohren emittiert werden, während das Mikrofonarray bevorzugt positionselektiv auf den Mund ausgerichtet sind. Der Nutzer kann sich somit frei bewegen, ohne dass ein Mitführen eines Mobilgerätes oder andere unterstützende Peripheriegeräte (Kopfhörer, Headsets) oder ähnlichem notwendig ist. Ebenso kann ein Mobilgerät, das der Nutzer mit sich führt, zur Lokalisierung während seiner möglichen Bewegung genutzt werden.

Eine weitere vorteilhafte Anwendung der erfindungsgemäßen Vorrichtung liegt in der Möglichkeit, mittels des Beamformings besonders präzise akustische Signale auszusenden, um unerwünschte Geräusche zu kompensieren. Dies kann beispielsweise am Arbeitsplatz in einem Großraumbüro zum Einsatz kommen. Hierbei kann die erfindungsgemäße Vorrichtung die Position, aus der der unerwünschte Schall kommt, durch das Beamforming von empfangenen akustischen Signalen durch das Mikrofonarray und/oder unterstützt durch die Antennenarrays erkennen. Zur Geräuschkompensation wird ein akustisches Signal ausgesendet, welches dafür konfiguriert ist, mittels destruktiver Interferenz den störenden Schall auszulöschen. Dazu kann beispielsweise von der erfindungsgemäßen Vorrichtung ein Gegensignal erzeugt werden, das dem störenden Schall entspricht, jedoch eine entgegengesetzte Polarität aufweist. Ein solches Signal wird auch als Antischall bezeichnet.

Die erfindungsgemäße Vorrichtung entfaltet somit insbesondere Vorteile dort, wo ein Freisprechen genutzt wird und/oder eine gezielte Geräuschkompensation erwünscht ist, beispielsweise in Großraumbüros, in Messehallen, in Konzerthallen usw. Jedoch ist ein Einsatz der erfindungsgemäßen Vorrichtungen auch für andere Anwendungen denkbar, welche von dem beschriebenen kombinierten bzw. wechselseitigen Beamforming von akustischen und elektromagnetischen Signalen profitieren.

Im Sinne der Erfindung umfasst ein elektromagnetisches Signal bevorzugt eine elektromagnetische Welle. Die Begriffe "elektromagnetisches Signal" und "elektromagnetische Welle" können synonym verwendet werden. Im Sinne der Erfindung umfasst ein akustisches Signal bevorzugt eine Schallwelle. Auch die Begriffe "akustisches Signal" und "Schallwelle" können synonym verwendet werden.

Der englische Begriff "Array" bedeutet bevorzugt "Anordnung, Aufstellung, Feld, Matrix". Ein Antennenarray bezeichnet im Sinne der Erfindung bevorzugt eine Anordnung aus mehreren, mindestens zwei, zumeist gleichartigen Antennen. In bevorzugten Ausführungsformen umfasst ein Antennenarray mindestens 5, 10, 50, 100, 500 oder mehr Antennen.

Die Antennenarrays sind bevorzugt für das Beamforming der elektromagnetischen Signale verantwortlich. Meist ist ein Antennenarray matrixförmig aus mehreren Einzelantennen zu einem Mehrantennensystem zusammengeschaltet. Dabei können Dipolantennen, Kreuzdipole, Parabolantennen oder Pencil-Beam-Antennen verwendet werden. Antennenarrays können durch Beamforming ihre Empfangs- und/oder Abstrahlcharakteristik optimieren. Zudem ist es von Vorteil, dass ein Antennenarray durch die Zusammenschaltung einzelner Antennen den Antennengewinn erhöht. Neben klassischen Antennenarrays, wie sie in Mehrantennensystemen verwendet werden, können auch phasengesteuerte Antennen, die eingangs beschriebenen Phased-Array-Antennen, zum Einsatz kommen, bei denen die unterschiedlichen Phasenlagen, mit denen die Einzelantennen angesteuert werden, die Abstrahlcharakteristik beeinflussen.

Die Geometrie der Anordnung bestimmt dabei, welche Ausrichtungen der elektromagnetischen Signale ermöglicht werden. Es gibt lineare Anordnungen, bei denen alle Antennen entlang einer Geraden angeordnet sind. Dies ist auch unter dem Ausdruck *Uniform Linear Array (ULA)* bekannt. Vorzugsweise können auch rechtwinklige Antennenarrays zum Einsatz kommen, die auch als *Uniform Rectangular Array (URA)* bezeichnet werden. Das URA ist dabei entlang einer Ebene angeordnet, z. B. entlang der x-y-Ebene, der y-z-Ebene oder der x-z-Ebene. Es können auch dreidimensionale Antennenarrays bevorzugt zum Einsatz kommen, wobei diese vorzugsweise von mehreren URAs, also von mehreren Ebenen, umfasst werden. Es kann auch bevorzugt sein, dass das Antennenarray entlang eines Kreises angeordnet ist, was auch unter dem Begriff *Uniform Circular Array (UCA)* bekannt ist. Es kann ebenfalls bevorzugt sein, dass Mischformen dieser Antennenarrys ausgebildet werden. Das erste Antennenarray ist bevorzugt zum Senden mittels Beamforming und das zweite Antennenarray ist bevorzugt zum Empfangen mittels Beamforming von elektromagnetischen Signalen ausgestaltet. Es kann jedoch auch bevorzugt sein, dass das erste und zweite Antennenarray ein Antennenarray bezeichnet, welche sowohl für das Senden als auch das Empfangen mittels Beamforming von elektromagnetischen Signalen konfiguriert ist. Vorzugsweise können das erste Antennenarray und das zweite Antennenarray als ein einzelnes Antennenarray betrieben werden, d. h. bevorzugt, dass ein einzelnes Antennenarray das Senden und Empfangen von elektromagnetischen Signalen vornimmt. Bevorzugt wird das Antennenarray, welches sowohl elektromagnetische Signale senden und empfangen kann, im Halbduplex betrieben. Somit können elektromagnetische Signale durch ein Antennenarray empfangen und versendet werden. Allerdings erfolgt bevorzugt der Betrieb im Halbduplex derart, dass ein Funkkanal verwandt wird, sodass ein Senden und Empfangen von elektromagnetischen Signalen (oder umgekehrt ein Empfangen und Senden) nacheinander erfolgt, d. h. vorzugsweise nicht gemeinsam.

Analoge Zusammenhänge gelten für das Mikrofon- und das Lautsprecherarray, die für das Beamforming der akustischen Signale verantwortlich sind. Ein Mikrofonarray bezeichnet im Sinne der Erfindung bevorzugt eine Anordnung aus mehreren, mindestens zweier Mikrofone. In bevorzugten Ausführungsformen umfasst ein Mikrofonarray mindestens 5, 10, 50, 100, 500 oder mehr Mikrofone. Ein Lautsprecherarray bezeichnet im Sinne der Erfindung bevorzugt eine Anordnung aus mehreren, mindestens zweier Lautsprecher. In bevorzugten Ausführungsformen umfasst ein Lautsprecherarray mindestens 5, 10, 50, 100, 500 oder mehr Lautsprechern. Auch das Mikrofonarray und/oder das Lautsprecherarray können entlang einer Geraden, einer Ebenen, kreisförmig und/oder dreidimensional angeordnet sein. Das Mikrofonarray ist bevorzugt zum Empfangen mittels Beamforming der akustischen Signale ausgebildet. Das Lautsprecherarray ist bevorzugt zum Senden von akustischen Signalen mittels Beamforming ausgebildet.

Ein eindimensionales Array entlang einer linearen Geraden weist bevorzugt eine zylindersymmetrische Charakteristik auf. Ihre Sensitivität unterscheidet lediglich Signaleinfallsrichtungen aus unterschiedlichen Winkeln zur Arrayachse. Ein solches Array unterscheidet nicht zwischen Signalen, die aus zueinander um die Arrayachse rotierenden Richtungen kommen.

Ein zweidimensionales Array, d. h. ein Array ausgebildet entlang einer Ebene, kann bevorzugt prinzipiell in alle Richtungen innerhalb des von der Array-Ebene begrenzten Halbraumes ausgerichtet werden. Allerdings unterscheiden zweidimensionale Arrays zumeist nicht zwischen Richtungen, die zueinander gespiegelt an der Array-Ebene liegen. Damit sind zweidimensionale Arrays "vorne-hinten-blind".

Dreidimensionale Arrays erlauben prinzipiell die Ausrichtung aus beliebige Raumrichtungen. "Vorne-hinten-Blindheit" und Abhängigkeit gegen Rotation werden vermieden.

Es ist auch zu erwähnen, dass der Abstand zwischen den einzelnen Arrayelementen, also zwischen den einzelnen Mikrofonen, Lautsprecher und/oder Antennen ein Mikrofon-, eines Lautsprecher-, und/oder eines Antennenarrays mitbestimmend sein kann, um räumliche Alias-Effekte zu vermeiden. Wie eingangs angeschnitten, bezeichnen Alias-Effekte die Ausbildung von "Nebenkeulen" in unerwünschten Raumrichtungen. Vorzugsweise ist der Abstand der Arrayelementen der erfindungsgemäßen Vorrichtung so ausgebildet, dass er der Wellenlänge der akustischen und/oder der elektromagnetischen Signale gleicht bzw. mit diesen korrespondiert, um räumliche Alias-Effekte zu vermeiden.

Die beschriebenen Zusammenhänge für die Arrayanordnung, insbesondere hinsichtlich ihrer Richtcharakteristik, gelten sowohl für das erste Antennenarray zum Senden von elektromagnetischen Signalen, das zweite Antennenarray zum Empfangen von elektromagnetischen Signalen, das Mikrofonarray zum Empfangen von akustischen Signalen und das Lautsprecherarray zum Senden von akustischen Signalen.

Eine Recheneinheit bezeichnet im Sinne der Erfindung bevorzugt eine Datenverarbeitungseinheit, welches vorzugsweise eine integrierte Schaltung (IC), eine anwendungsspezifische integrierte Schaltung (ASIC), eine programmierbare logische Schaltung (PLD), ein Field Programmable Gate Array (FPGA), einen Mikroprozessor, einen Mikrocomputer, eine speicherprogrammierbare Steuerung und/oder eine sonstige elektronische, bevorzugt programmierbare, Schaltungen umfasst.

Die Recheneinheit kann bevorzugt zudem eine Speichereinheit und/oder Kommunikationseinheit umfassen. Eine Speichereinheit erlaubt die Sicherung und/oder Zwischenspeicherung von Daten. Nicht beschränkende Beispiele von Speichern, vorzugsweise Halbleiterspeicher sind flüchtige Speicher, (RAM)-Speicher oder nicht-flüchtige Speicher, wie ROM-Speicher, EPROM-Speicher, EEPROM-Speicher oder Flash-Speicher und/oder andere Speichertechnologien.

Eine Kommunikationseinheit bezeichnet im Sinne der Erfindung bevorzugt eine Einrichtung zum Übertragen, insbesondere zum Senden und/oder Empfangen von Daten. Die Übertragung erfolgt bevorzugt durch gerichtete oder ungerichtete elektromagnetische Wellen, wobei der Bereich des genutzten Frequenzbands je nach Anwendung und verwendeter Technik von wenigen Hertz (Niederfrequenz) bis hin zu mehreren hundert Terahertz variieren kann, wobei beispielsweise folgende Datenübertragungsverfahren genutzt werden können: Bluetooth, WLAN, ZigBee, NFC, Wibree, WiMAX und/oder zelluläre Mobilfunknetze wie GSM und UMTS im Radiofrequenzbereich sowie IrDA und optischer Richtfunk (FSO) im infraroten bzw. optischen Frequenzbereich.

Die Recheneinheit kann insbesondere selbst ein Prozessor oder eine Prozesseinheit sein oder von mehreren Prozessoren gebildet wird. Die Recheneinheit ist bevorzugt dazu bestimmt, dass ein Senden und Empfangen der elektromagnetischen und/oder akustischen Signale durch die Vorrichtung mittels Beamforming erfolgt, wobei für das Beamforming eine kombinierte und/oder wechselseitige Verarbeitung elektromagnetischer und akustischer Signale vorgenommen wird.

Zu diesem Zweck ist es bevorzugt, dass auf der Recheneinheit eine Software installiert vorliegt, welche dazu eingerichtet ist bzw. Befehle umfasst, um eine kombinierte und/oder wechselseitige Verarbeitung elektromagnetischer und akustischer Signale vorzunehmen.

Der Begriff der Verarbeitung für ein Beamforming ist breit auszulegen und umfasst vorzugsweise Rechenschritte, die nötig sind, um beispielsweise eine Lokalisation durchzuführen, die Arrays auf die gewünschte Position zu steuern, etc. Daher betrifft die Erfindung vorzugsweise auch computerimplementierte Verfahren, welche für das verbesserte Beamforming von elektromagnetischen und/oder akustischen Signalen verantwortlich ist. Die Begriffe "Software", "Programm" und "Computerprogramm" können synonym verwendet werden.

Die Software kann hierbei zumindest teilweise in Form eines Cloud-Services bzw. Internet-Dienstes bereitgestellt werden, wobei die Vorrichtung beispielsweise über das Internet Daten an eine Applikation in einer Cloud übermittelt. Auch in diesem Fall liegt eine Software auf der Recheneinheit vor, welche dazu eingerichtet ist bzw. Befehle umfasst, eine kombinierte und/oder wechselseitige Verarbeitung elektromagnetischer und akustischer Signale vorzunehmen. Die auf der Recheneinheit der Vorrichtung installierte Software muss nicht alle Schritte selbstständig auf der Vorrichtung durchführen. Stattdessen können die Daten über empfangene elektromagnetische und akustische Signale an eine Cloud (mit einer externen Datenverarbeitungsvorrichtung) übermittelt werden, welche mindestens teilweise eine Verarbeitung der elektromagnetischen und akustischen Signale vornimmt und die Ergebnisse der Auswertung, welche für das beschriebene optimierte Beamforming genutzt werden können, wieder an die Recheneinheit der Vorrichtung übermittelt.

Wenn im Folgenden bevorzugte Merkmale der Recheneinheit oder einer Software beschrieben werden, erkennt der Fachmann, dass diese bevorzugt gleichermaßen für eine Software gelten, welche die Schritte vollständig auf der Vorrichtung durchführt, als auch für eine Software, welche einige (beispielsweise rechenintensive) Schritte auf eine externe Datenverarbeitungsvorrichtung eines Cloud-Service ausgelagert hat. Ein Fachmann erkennt, dass die vorgesehene kombinierte und/oder wechselseitige Verarbeitung elektromagnetischer und akustischer Signale für ein Beamforming als einheitliches Konzept zu verstehen ist, unabhängig davon, welche Schritte des Algorithmus auf der Vorrichtung selbst oder durch eine externe Datenverarbeitungsvorrichtung auf einer Cloud durchgeführt werden.

Im Sinne der Erfindung bezeichnet eine wechselseitige Verarbeitung bevorzugt, dass die akustischen Signale eine Grundlage für das Beamforming der elektromagnetischen Signale oder dass die elektromagnetischen Signale eine Grundlage für das Beamforming der akustischen Signale sein kann. Eine kombinierte Verarbeitung bezeichnet im Sinne der Erfindung bevorzugt, dass elektromagnetische und akustische Signale in Kombination eine Grundlage für das Beamforming einer der beiden Signalarten oder für beide Signalarten in Kombination darstellen.

In einer weiteren bevorzugten Ausführungsform ist die erfindungsgemäße Vorrichtung dadurch gekennzeichnet, dass das Senden und/oder das Empfangen von elektromagnetischen Signalen eine Verarbeitung von empfangenen akustischen Signalen umfasst.

Insbesondere können vorzugsweise akustische Signale von der Vorrichtung empfangen werden, welche für ein Beamforming der elektromagnetischen Signale genutzt wird. Durch die empfangenen akustischen Signale durch das Mikrofonarray kann insbesondere hinsichtlich der Lokalisierung eine Grobschätzung der Position vorgenommen werden. Konkret wird die Grobschätzung bevorzugt durch eine Software, welche mindestens teilweise auf der Recheneinheit installiert vorliegt, vorgenommen. Auf Basis der Grobschätzung können durch das erste Antennenarray zum Senden von elektromagnetischen Signalen diese initial an die ermittelte Position versendet werden, wobei auf Basis der empfangenen elektromagnetischen Signale auch eine Feinjustierung möglich ist.

In einer weiteren bevorzugten Ausführungsform ist die erfindungsgemäße Vorrichtung dadurch gekennzeichnet, dass das Senden und/oder das Empfangen von akustischen Signalen eine Verarbeitung von empfangenen elektromagnetischen Signalen umfasst.

Es kann auch bevorzugt sein, dass auf Basis der empfangenen elektromagnetischen Signale (durch das zweite Antennenarray) akustische Signale gezielt ausgesendet und/oder empfangen werden. Mittels der empfangenen elektromagnetischen Signale können akustische Signale über Beamforming durch das Lautsprecherarray versendet oder mittels des Mikrofonarrays gezielt empfangen werden. Damit wird der Schall vorteilhafterweise präzise auf einen gewünschten Bereich emittiert bzw. von einem Bereich empfangen. Wie eingangs erläutert, kann hierdurch beispielsweise Schall gezielter auf die Hörorgane eines Nutzers übertragen werden oder von einem Sprechorgan, sodass Telefonate, das Hören von Musik etc. auch während der Bewegungen eines Nutzers durch den Raum mit unverminderter Qualität fortgesetzt werden kann. Die verbesserte Lokalisierung aufgrund der Auswertung elektromagnetischer Signale erlaubt hierbei eine Verbesserung der Qualität und des Beamformings der akustischen Signale.

Somit kann es bevorzugt sein, dass mittels Beamforming empfangene elektromagnetischen Signale die Basis für das Empfangen und/oder Versenden akustischer Signalen mittels Beamforming sind. Im Gegensatz zur US 2014/253389 A1 bilden die mittels Beamforming empfangenen elektromagnetischen Signale wiederum eine Grundlage für das Beamforming der akustische Signale.

Auch umgekehrt umfasst eine wechselseitige Verarbeitung vorzugsweise ein Empfangen oder Versenden von elektromagnetischen Signalen mittels Beamforming auf Basis von mittels Beamforming empfangenen akustischen Signalen.

In einer weiteren bevorzugten Ausführungsform ist die Erfindung dadurch gekennzeichnet, dass das Senden und/oder Empfangen von elektromagnetischen und/oder akustischen Signalen eine Verarbeitung von empfangenen akustischen und elektromagnetischen Signalen umfasst.

Dies hat den Vorteil, dass durch das Senden und/oder Empfangen von elektromagnetischen und akustischen Signalen ein ständiger Austausch stattfindet und somit die Position mit hoher Präzision durch die Recheneinheit ermittelt wird. Damit geht ebenfalls einher, dass beispielsweise während eines Telefonats insbesondere die Signalqualität weder der akustischen Signale noch der elektromagnetischen Signale leidet, da durch eine kombinierte Verarbeitung ein optimiertes Beamforming für beide Signalarten erfolgt.

Der gezielte Austausch mittels Beamforming von elektromagnetischen Signalen kann beispielsweise durch das Tragen eines WiFi-Tags unterstützt werden. Insbesondere können sich die Antennenarrays, das Lautsprecherarray und/oder das Mikrofonarray der erfindungsgemäßen Vorrichtung mit dem WiFi-Tag verbinden. Es kann auch bevorzugt sein, dass der ständige Austausch von elektromagnetischen Signalen zwischen der erfindungsgemäßen Vorrichtung und einem anderen Gerät, beispielsweise ein Smartphone, das der Nutzer mit sich führt, stattfindet. Jedes Gerät, welches geeignete elektromagnetische Signale aussenden kann, kann zur verbesserten Positionsbestimmung des Nutzers durch die erfindungsgemäße Vorrichtung genutzt werden. Vorteilhaft kann in Bezug auf Freisprechanalgen hierdurch weitestgehend auf Peripheriegeräte, wie Kopfhörer oder Headsets verzichtet werden.

Vorteilhafterweise eignet sich die erfindungsgemäße Vorrichtung nicht nur zur Unterstützung der Kommunikation über Mobilgeräte mit externen Personen, sondern auch für "interne" Kommunikationen innerhalb eines Raumes. So ist es beispielsweise möglich, während eines Vortrages oder einer Konferenz mit mehreren Personen innerhalb eines Raumes, eines Saales oder einer Halle die erfindungsgemäße Vorrichtung für die Kombination von akustischen und elektromagnetischen Signalen mittels Beamforming zu nutzen, um für eine genauere Positionsbestimmung eines Sprechers und insbesondere für eine bessere Qualität des Tones zu sorgen. Nicht partizipierende Partner der Diskussion können aufgrund des Beamformings der emittierten akustischen Signale ungestört weiterarbeiten oder sich an einer anderen Diskussionsrunde beteiligen.

Die Möglichkeiten der Nutzung einer kombinierten und/oder wechselseitigen Verarbeitung akustischer oder elektromagnetischer Signale sind vielseitig. Im Stand der Technik erfolgte ein Beamforming stattdessen isoliert nur für eine Signalart. Es stellt somit eine wesentliche Abkehr vom Stand der Technik dar, dass unter Verarbeitung von empfangenen akustischen Signalen elektromagnetische Signale ausgesendet werden (oder umgekehrt) und/oder ein Empfangen/Senden von akustischen/elektromagnetischen Signalen auf Basis einer kombinierten Verarbeitung der beiden Signalarten erfolgt.

Durch die wechselseitige und/oder kombinierte Verarbeitung von elektromagnetischen und akustischen Signalen können vorteilhaft verbesserte Genauigkeiten erreicht werden im Rahmen von Lokalisationen, da statt ein Beamforming von einer Signalart ein Beamforming von zwei Signalarten genutzt wird. So kann beispielsweise das Beamforming von akustischen Signale vorteilhaft eine Grobschätzung liefern, um präziser elektromagnetische Signale mittels Beamforming aussenden zu können. Vorteilhaft eignet sich das Beamforming von elektromagnetischen Signalen besonders gut für eine Feinschätzung einer Position.

In einer weiteren bevorzugten Ausführungsform der Erfindung ist diese dadurch gekennzeichnet, dass die Vorrichtung eine Lokalisierung von Objekten und/oder Nutzern über die empfangenen und/oder gesendeten elektromagnetischen und akustischen Signale vornimmt.

Dazu kann die erfindungsgemäße Vorrichtung bevorzugt diverse Methoden der Lokalisierung nutzen, um Objekte und/oder Nutzer zu lokalisieren. Die Bezeichnung der bevorzugten Methoden erfolgt nach den Informationen, die sie für die Positionsbestimmung verwenden: Verbindungsinformationen (CoO, *engl. Cell of Origin*)*,* Empfangswinkel der Signale (AoA, *engl. Angle of Arrival*), Empfangszeitpunkte der Signale (ToA, *engl. Time of Arrival*), Bidirektionale Umlaufzeit des Signals (RToF, *engl. Round-trip Time of Flight*)*,* Zeitdifferenzen der eingehenden Signale (TDoA, *engl. Time Difference of Arrival*) und Signalstärken der eingehenden Signale (RSSI, *engl. Received Signal Strength Indicator*)*.*

Es ist bekannt, dass Verbindungsinformationen fast in jedem drahtlosen Funknetz vorhanden sind. Die Genauigkeit hängt bei diesem Verfahren mit der Granularität und Größe der Zellen im verwendeten Funknetz zusammen. Bei diesem auch "Cell of Origin" (CoO) genannten Verfahren wird die Position anhand der mit dem mobilen Knoten assoziierten ortsfestem Knoten bestimmt. Jedem ortsfesten Knoten und damit auch der Zelle ist eine eindeutige Identifizierung (Cell-ID) zugeordnet. Die Positionen der ortsfesten Knoten müssen bekannt sein.

Das AoA-Verfahren verwendet die Einfallswinkel der empfangenen Signale. Dabei werden mindestens zwei ortsfeste Knoten mit Richtantennen benötigt. Mit den empfangenen Signalen von einem mobilen Knoten kann der Einfallswinkel des Signals bestimmt werden. Die Berechnung der Distanz zu den bekannten Positionen der ortsfesten Stationen erfolgt mittels Triangulation. Dabei werden die Winkelbeziehungen innerhalb eines Dreiecks genutzt. Über die bekannte Distanz zwischen den ortsfesten Knoten und den beiden gemessenen Einfallswinkeln kann die Position des mobilen Knotens berechnet werden.

Das ToA-Verfahren bestimmt anhand der Signallaufzeit eines Signals die Distanz zwischen zwei Knoten. Im gesendeten Frame ist die Sendezeit to mitenthalten, sodass im Empfänger der Abstand d aus der Empfangszeit t₁ und der Signalausbreitungsgeschwindigkeit c bestimmt werden kann. Voraussetzung für das ToA-Verfahren ist zumeist eine hochgenaue Synchronisation von Uhren, die sich auf beiden Knoten befinden müssen, damit die Laufzeit exakt bestimmt werden kann.

Beim RToF-Verfahren wird die Umlaufzeit eines Signals gemessen. Der Empfänger bestätigt den Empfang des Signals mit einem sogenannten Acknowledgement-Frame, indem auch die Verarbeitungszeit im Empfänger tₚ enthalten ist. Eine Synchronisation der Uhren der Knoten ist nicht notwendig, da keine absoluten Zeiten zwischen Sender und Empfänger benötigt werden. Für die Erzeugung des Acknowledgement-Frames wird im Empfänger im Vergleich zur Signallaufzeit eine relativ große Zeitspanne benötigt. Dies führt zu einem Messfehler, falls die Uhren beider Knoten während der Messung auseinanderlaufen (Clock Drift). Dieser Fehler kann ausgeglichen werden, wenn RToF von beiden Seiten aus initiiert wird. Sind die Distanzen zu mindestens drei ortsfesten Knoten bestimmt, kann mit der Trilateration eine Position im zweidimensionalen Raum berechnet werden. Im Gegensatz zur Triangulation werden bei der Trilateration nur die Entfernungen zu den ortsfesten Knoten benötigt, dadurch ist dieses Verfahren deutlich leichter zu implementieren, da die Anforderungen an eine Hardware zur Distanzmessung deutlich geringer sind als die für die Bestimmung des Einfallswinkels eines empfangenen Signals.

Als TDoA-Verfahren werden zwei unterschiedliche Verfahren bezeichnet. Bei einem TDoA-Verfahren sendet ein Knoten gleichzeitig zwei Signale mit unterschiedlicher Signalausbreitungsgeschwindigkeit aus. Aus den unterschiedlichen Empfangszeitpunkten t₀ und t₁ kann im Empfänger die Distanz zum Sender bestimmt werden. Typischerweise wird neben einem Funksignal ein Ultraschallsignal verwendet. Da die Lichtgeschwindigkeit wesentlich größer als die Schallgeschwindigkeit ist, kann die Laufzeit des Funksignals bei der Berechnung der Distanz d vernachlässigt werden. Bei dem anderen TDoA-Verfahren berechnen die ortsfesten Empfänger die Position eines mobilen Senders aus der Differenz der Empfangszeitpunkte des Signals. Dieses Verfahren wird im Mobilfunk auch als *Observed Time Difference of Arrival* (OTDoA) bezeichnet. Der Vorteil gegenüber dem ToA-Verfahren liegt darin, dass keine Synchronisation zwischen den mobilen Knoten und den ortsfesten Knoten vorhanden sein muss. Somit wird keine hochpräzise Uhr in den mobilen Knoten benötigt.

RSSI-Verfahren bezeichnen Verfahren, die die empfangenen Signalstärken für die Positionsbestimmung nutzen. Bei der Berechnung der Distanz zu einem ortsfesten Knoten wird die Freiraumdämpfung berücksichtigt, die besagt, dass die Signalstärke mit der Distanz zum Sender quadratisch abnimmt. Über Trilateration kann dann die Position des mobilen Knotens im zweidimensionalen Raum berechnet werden. Meist verwenden RSSI-Verfahren zur Lokalisierung in Gebäuden Fingerprinting. Ein Fingerprinting-Verfahren verwendet eine Radio-Map, in der die Signalstärken mit einer Position abgespeichert werden. Das Verfahren ist in zwei Phasen unterteilt. In der Kalibrierungsphase werden die empfangenen Signalstärken an vorher definierten Positionen in der Radio-Map abgespeichert. In der Lokalisierungsphase bewegt sich der mobile Knoten in der gleichen Umgebung. Dabei werden die aktuell gemessenen Signalstärkewerte mit denen aus der Radio-Map verglichen. Metriken für den Vergleich der Signalstärkewerte sind der Euklidische Abstand, der Bayes-Algorithmus oder die Delaunay-Triangulation mit konstanten Signalstärkekennlinien.

Insbesondere kann die erfindungsgemäße Vorrichtung diese Möglichkeiten und/oder verschiedene dieser Möglichkeiten in Kombination zur Positionsbestimmung nutzen. Dabei können sowohl akustische und/oder elektromagnetische Signale für die Lokalisierung genutzt weden. Beispielsweise kann es bevorzugt sein, dass eine Ortung über eine Überlagerung von Triangulationssystemen erfolgt, z. B. das AoA-Verfahren mit akustischen Signalen und das AoA-Verfahren für elektromagnetische Signale. Es kann aber auch bevorzugt sein, dass verschiedene und mehrere Überlagerungen von Ortungsverfahren herangezogen werden.

Im Sinne der Erfindung bezeichnet ein Funknetz bevorzugt ein Kommunikationsnetz, in welchem Informationen mittels elektromagnetischer Signale übertragen werden. Bevorzugt ist ein Funknetz ein leitungsloses Telekommunikationsnetz, bei dem Methoden der Funktechnik, insbesondere die eben genannten Möglichkeiten zur Positionsbestimmung, genutzt werden können. Bevorzugt umfasst ein Funknetz mehrere Netzwerkknoten, welche auch Verbindungspunkte der Datenübertragungen darstellen. Ein Netzwerkknoten kann insbesondere also ein Zwischenknoten oder ein Endknoten bei der Datenübertragung sein.

Funknetze können auf unterschiedliche Arten klassifiziert werden. Eine Klassifikation erfolgt insbesondere über die Koordination der Netzwerkknoten im Infrastruktur-Netzwerk oder Ad-hoc-Netz. Weiterhin kann die eingesetzte Funktechnik betrachtet werden, insbesondere über Bluetooth (IEEE 802.15, WPAN), WLAN (IEEE 802.11), WiMAX (IEEE 802.16), GSM, UMTS und/oder 5G. Die Kommunikationsbeziehung der Systeme ist ebenfalls von Bedeutung, da beispielsweise ein Sender an einen Empfänger senden (unicast) kann, an alle möglichen Empfänger (broadcast), an eine definierte Gruppe aller Empfänger (multicast) oder an (mindestens) einen beliebigen Empfänger aus einer Gruppe (anycast). Vorteilhafterweise kann sich die erfindungsgemäße Vorrichtung mit verschieden, auch den o.g., Funknetzen verbinden und/oder ein Beamforming mit diesen Geräten durchführen.

In einer weiteren bevorzugten Ausführungsform ist die erfindungsgemäße Vorrichtung dadurch gekennzeichnet, dass die gesendeten und/oder empfangenen akustischen Signale für eine Grobschätzung und die gesendeten und/oder empfangenen akustischen Signale für eine Feinschätzung der Lokalisierung genutzt werden.

Eine Grobschätzung meint vorzugsweise eine Lokalisierung mit einer Winkelgenauigkeit von ca. 1° bis ca. 20° und einer örtlichen Genauigkeit von ca. 5 m bis ca. 50 m, während eine Feinschätzung vorzugsweise eine Winkelgenauigkeit von ca. 0,5° bis ca. 5° und eine örtliche Genauigkeit von ca. 0,1 m bis ca. 5 m meint.

Begriffe wie im Wesentlichen, ungefähr, etwa, ca. etc. beschreiben bevorzugt einen Toleranzbereich von weniger als ± 40%, bevorzugt weniger als ± 20%, besonders bevorzugt weniger als ± 10 %, noch stärker bevorzugt weniger als ± 5% und insbesondere weniger als ± 1% und umfassen stets den exakten Wert. Ähnlich beschreibt bevorzugt Größen, die ungefähr gleich sind. Teilweise beschreibt bevorzugt zu mindestens 5 %, besonders bevorzugt zu mindestens 10 %, und insbesondere zu mindestens 20 %, in einigen Fällen zu mindestens 40 %.

Grundsätzlich ist eine Auflösungsgrenze einer Grobschätzung durch die akustischen Signale dadurch bedingt, dass die Wellenlänge der akustischen Signale im Dezimeterbereich (beispielsweise ca. 34 cm bei 1000 Hz) liegt und feinere Lokalisierungen erschwert.

Darüber kommt es aufgrund verschiedener Faktoren zu Verrauschungen bei akustischen Signalen, von denen einige eingangs bereits benannt wurden. Unter anderem kann das Signal selbst, insbesondere ein Sprachsignal, Probleme durch eine große Bandbreite von 70 Hz bis 4 kHz verursachen, vor allem Telefonanwendungen und breitbandige Verwendungen bis hin zu 10 kHz. Durch die Variation der Sprachintensität kann die Signalqualität im Zeitverlauf schwanken. Darüber hinaus können Amplituden- und Phasenfehler auftreten, welche durch endliche Bandbreiten, aber auch durch klimatische Gegebenheiten bedingt sind. Zudem kommen Reflexionen und Rauschquellen hinzu. Eine hohe Anzahl von schallreflektierenden Oberflächen führt zu einer Vermehrung von Reflexionen und somit zu einer Verschlechterung der Signalqualität, insbesondere hinsichtlich der Lokalisation.

Elektromagnetische Wellen erlauben in Abhängigkeit der Frequenz aufgrund teilweise geringerer Wellenlängen und geringerer Anfälligkeit für ein Verrauschen eine feinere Auflösung.

Bei elektromagnetischen Signalen können jedoch insbesondere Mehrwegeausbreitungen stattfinden, z. B. über das Reflektieren, Brechen, Streuen und/oder Beugen von elektromagnetischen Signalen. Durch die unterschiedlich langen Übertragungswege kann ein Signal mehrfach und zeitlich versetzt bei einem Empfänger ankommen. Diese einzelnen Echosignale können je nach Dämpfung und Weg unterschiedliche Amplituden und Laufzeiten aufweisen, die sich negativ auf die Signale auswirken.

Die Nutzung von elektromagnetischen und akustischen Signalen in Kombination, insbesondere bei der Lokalisation, ist von besonderem Vorteil, da hierdurch eine besonders gute, genaue und zuverlässige Positionsbestimmung erfolgt. Mithin kann es sein, dass die empfangenen und/oder gesendeten elektromagnetischen Signale die Grundlage dafür liefern, dass sich das Lautsprecherarray und/oder das Mikrofonarray an die berechnete Position ausrichtet. Dies kann in verschiedenen Situationen nützlich sein.

Beispielsweise kann es sein, dass eine Person in einer großen Konferenzhalle einen Vortrag hält und sich während des Vortrages entlang der Bühne bewegt. Vorteilhaft kann die erfindungsgemäße Vorrichtung genutzt werden, anstatt eines üblichen Mikrofontyps. Durch die genaue Positionsbestimmung mithilfe der elektromagnetischen Signale (durch das erste und/oder das zweite Antennenarray sowie der Recheneinheit/Software) kann ein kontinuierlicher Austausch von elektromagnetischen Signalen von einem Gerät des Nutzers, z. B. dessen Smartphone, das Mikrofonarray gezielt auf den Nutzer gerichtet werden, um dessen Sprache zu empfangen. Über das Lautsprecherarray kann dann das Sprachsignal gezielt an die Zuschauer übertragen werden. Auch hierfür können Mobilgeräte der Nutzer oder andere Quellen elektromagnetischer Signale genutzt werden, um eine gerichtete Schallabgabe zu ermöglichen.

Vorteilhaft ist bei diesem Szenario mittels der erfindungsgemäßen Vorrichtung, dass die Qualität der akustischen Signale nahezu ständig auf einem annähernd konstant guten Pegel bleibt. Dagegen ist es im Stand der Technik bekannt, dass wechselnde Positionen eines Sprechers die Qualität der akustischen Signale schwächen. Kabellose Headset-Mikrofone können teilweise Abhilfe leisten. Allerdings schränken auch diese die freie Bewegung ein und können fehlerbehaftet sein (fehlende Batterie, Rauschen durch Interferenz mit anderen Geräten, etc.).

Es kann auch bevorzugt sein, dass die gesendeten und/oder empfangenen akustischen Signale die Basis für eine Messung mithilfe elektromagnetischer Signale liefert.

Es ist weiterhin von Vorteil, dass durch die Nutzung beider Signalarten vor allem die Rechenzeit verkürzt werden kann, um insbesondere die Position eines Objektes und/oder eines Nutzers zu bestimmen. Dies kann damit begründet werden, dass zur Lokalisierung oder dem Beamforming Synergien bei der Verarbeitung der Signale genutzt werden können. Durch eine Grobschätzung der Position mittels akustischer Signale kann beispielsweise auf aufwendige Rechenoperationen zum Ausschluss von Mehrwegeausbreitungen bei elektromagnetischen Signalen verzichtet werden. Umgekehrt sind weniger rechenintensive Schritte zur Feinauflösung akustischer Signale notwendig, sofern diese durch die Verarbeitung elektromagnetischer Signale erfolgen kann.

In einer weiteren bevorzugten Ausführungsform ist die erfindungsgemäße Vorrichtung dadurch gekennzeichnet, dass die Vorrichtung für ein Senden und/oder ein Empfangen eines Pilotsignals konfiguriert ist, welches bevorzugt eine Lokalisierung der Objekte und/oder der Nutzer unterstützen kann.

Ein Pilotsignal bezeichnet bevorzugt ein Signal, das außerhalb und unabhängig vom eigentlichen Nutzsignal übertragen wird und beispielsweise auf einer vom Nutzsignal entfernten Frequenz gesendet wird. Ein Pilotsignal dient vorzugsweise zu Kontroll-, Steuerungs-, Referenz- oder Überwachungszwecken. Bekannt sind Pilotsignale beispielsweise aus drahtlosen Mikrofonen, die mit einem Pilotsignal den Status ihrer Batterie übermitteln können. Pilotsignale kommen in vielen weiteren Gebieten zum Einsatz, wann auch immer ein bestimmter Zustand als Referenz oder eine sonstige Information übertragen werden muss, z. B. in Ultrakurzwellen-Stereo-Radiosendungen, Babyphonen usw.

Signale, die übertragen werden, können verrauscht sein. Bei der Übertragung von Nachrichtensignalen ist das Rauschen zumeist eine erhebliche Störquelle. Die Rauschquellen treten dabei im gesamten Übertragungssystem, also im Sender, im Empfänger und auf dem Übertragungsweg auf. Um dieses Rauschen zu umgehen und ein "klares", bekanntes Signal zu übertragen, können vorteilhaft Pilotsignale zum Einsatz kommen.

Vermittelt werden die Signale bevorzugt über Übertragungskanäle. Dabei ist ein Übertragungskanal nicht auf sein Medium beschränkt. Beim Mobilfunk ist bevorzugt das komplexe Zusammenspiel von Sende- und Empfangseinheit und allen weiteren Störungen während der Funkübertragung, beispielsweise durch die beschriebene Mehrwegeausbreitung, ein Übertragungskanal.

Insbesondere bei der Lokalisation können Pilotsignale nützlich sein. Beispielsweise sorgen schmalbandige Pilotsignale für eine gute Winkelauflösung, was beispielsweise beim AoA-Verfahren, aber auch generell bei allen Lokalisationsverfahren, die Winkel betrachten, vorteilhaft sind. Schmalbandige Signale bezeichnen Signale, die über ein Schmalband übertragen werden, dessen Bandbreite vorzugsweise so gering ist, dass der Frequenzgang nahezu als konstant angenommen werden kann.

Vorteilhafterweise können auch breitbandige Pilotsignale für die Lokalisation genutzt werden, da sie insbesondere für eine gute Abstandsauflösung sorgen, was beispielsweise beim ToF-Verfahren besonders nützlich ist, aber auch bei allen Verfahren zur Lokalisation, wo der Abstand eine entscheidende Größe ist.

Ein Nutzsignal bezeichnet bevorzugt ein zu Nutzzwecken verwendetes Signal, das durch bestimmte Parameter oder Größen wie beispielsweise einen Verlauf, Amplitude, Frequenz usw. gekennzeichnet sein kann. Das Nutzsignal kann aus einem zeitlich kontinuierlichen oder zeitdiskreten Vorgang bestehen. Das Nutzsignal kann beispielsweise Audiosignale eines Gespräches, Telefonats, Musik etc. betreffen, welche mittels der Vorrichtung empfangen und/oder gesendet werden. Ein Pilotsignal kann hingegen beispielsweise eine Sinussignal mit fester Audiofrequenz sein, welche vorzugsweise lediglich zur Lokalisierung verwendet wird. Ebenso kann ein Nutzsignal im Hinblick auf elektromagnetische Signale vorzugsweise ein Signal zur Übertragung von Daten betreffen, während ein Pilotsignal bevorzugt ein einfaches bekanntes Funksignal ist, beispielsweise ein Signal mit fester Frequenz. Pilot- und Nutzsignale können dabei akustische und/oder elektromagnetische Signale sein.

Bevorzugt werden die Rechenschritte zur Ermittlung der Lokalisation von der Recheneinheit der erfindungsgemäßen Vorrichtung übernommen. Es kann auch bevorzugt sein, dass die Ermittlung der Lokalisation über ein Netzwerk erfolgt, insbesondere über eine Cloud. Dabei können einige (zum Beispiel rechenintensive) Schritte an ein Netzwerk, zum Beispiel an eine Cloud, ausgelagert werden. Die Software kann daher zumindest teilweise in Form eines Cloud-Services bzw. Internet-Dienstes bereitgestellt werden, wobei die erfindungsgemäße Vorrichtung die Berechnungen zur Lokalisation an eine Applikation in der Cloud übermittelt. Auch in diesem Fall liegt eine Software auf der Recheneinheit vor. Die auf der Recheneinheit des Gerätes installierte Software führt jedoch nicht notwendigerweise alle Schritte selbstständig auf dem Gerät durch. Stattdessen können die Daten an eine Cloud (mit einer externen Datenverarbeitungsvorrichtung) zur Bestimmung der Position übermittelt werden.

Die Software auf der Recheneinheit oder als Cloud-Dienst verarbeitet die gesendeten und/oder empfangenen elektromagnetischen und/oder akustischen Signale und sendet das Ergebnis zurück an den Nutzer.

Ein Fachmann erkennt, dass die vorgesehene Auswertung der gesendeten und/oder empfangenen elektromagnetischen und/oder akustischen Signale als einheitliches Konzept zu verstehen ist, unabhängig davon, welche Schritte des Algorithmus auf dem Gerät selbst oder durch eine externe Recheneinheit auf einer Cloud durchgeführt werden.

In einer bevorzugten Ausführungsform kann die Recheneinheit dazu eingerichtet sein, die empfangenen Signale als Rohdaten aufzubereiten und anschließend eine externe Datenverarbeitungseinheit einer Cloud zu übertragen. Die Aufbereitung oder Vorverarbeitung der Rohdaten kann bspw. in eine Wandlung der Messdaten in ein gefordertes Format oder bereits einfachen Rechenoperation (addieren, subtrahieren) betreffen. Rechenintensive Schritte zur Bestimmung der Position der Nutzer der Vorrichtung und/oder optimierte Beamprofile können hingegen mittels einer prozessorstarken externen Datenverarbeitungseinrichtung oder einer Cloud erfolgen. Die Ergebnisse über die Lokalisierung und/oder Anforderungen an die Beamprofile können wiederum vorzugsweise an die Recheneinheit übertragen werden, welche vorzugsweise auf deren Basis Steuersignale zur Ansteuerung der Antennenarrays, Mikrofon- oder Lautsprecherarrays bereitstellt.

Die Software kann in jeder Programmiersprache oder modellbasierten Entwicklungsumgebung geschrieben werden, wie beispielsweise C/C++, C#, Objective-C, Java, Basic/VisualBasic oder Kotlin. Der Computercode kann Unterprogramme umfassen, die in einer proprietären Computersprache geschrieben sind, die spezifisch für das Auslesen oder die Steuerung oder einer anderen Hardwarekomponente des Gerätes vorgesehen sind.

In einer weiteren bevorzugten Ausführungsform ist die erfindungsgemäße Vorrichtung dadurch gekennzeichnet, dass das Mikrofonarray zum Empfang akustischer Signale innerhalb eines Frequenzbereiches zwischen 10 Hz - 100 kHz, bevorzugt 20 Hz - 20 kHz, eingerichtet ist und das Lautsprecherarray für ein Senden akustischer Signale innerhalb eines Frequenzbereiches zwischen 10 Hz - 100 kHz, bevorzugt 20 Hz - 20 kHz, eingerichtet ist. Der Frequenzbereich zwischen 20 kHz und 100 kHz ist vorzugsweise ein Ultraschallbereich, welcher nicht vom Menschen nicht zu hören ist. Die Aussendung von Pilotsignalen kann daher in diesem Frequenzbereich besonders vorteilhaft sein, um ein Erkennungssignale zu übermitteln, welche nicht mit den Nutzsignalen interferieren.

Akustische Signale mit einer Frequenz zwischen ca. 16 Hz und 20 kHz sind für den Menschen hörbar, sodass Nutzsignale vom Lautsprecherarray und Mikrofonarray vorzugsweise in diesem Frequenzbereich akustische Signale emittieren oder aufnehmen.

Das bevorzugte Mikrofonarray und/oder Lautsprecherarray ist vorteilhaft nicht auf bestimmte Frequenzbereiche beschränkt. Insbesondere eignet sich die bevorzugte Vorrichtung damit auch für Anwendungsfelder sowohl bei Ultraschall als auch hörbaren Schallfrequenzen. Vorteilhaft ist damit, als Abkehr gegenüber der US 2014/253389 A1, eine Beschränkung auf einen bestimmten Frequenzbereich für Ultraschallfrequenzmessungen nicht notwendig.

In einer weiteren bevorzugten Ausführungsform ist die erfindungsgemäße Vorrichtung dadurch gekennzeichnet, dass das erste und/oder das zweite Antennenarray zum Senden und/oder zum Empfangen von elektromagnetischen Signalen innerhalb eines Frequenzbereiches zwischen 1 MHz und 10 THz, vorzugsweise zwischen 150 MHz und 80 GHz, konfiguriert ist.

Diese Frequenzbereiche erlauben verschiedenste Anwendungen. Der Frequenzbereich von 1 MHz - 3 MHz wird vorzugsweise beispielsweise im Mittelwellenrundfunk, im Kurzwellenrundfunk oder im Grenzwellenbereich, im militärischen Flugfunk und/oder im Amateurfunkdienst verwendet. Die Wellenlängen in diesem Bereich werden auch als Mittelwellen oder Hektometerwellen bezeichnet. Der Frequenzbereich von 3 - 30 MHz wird vorzugsweise ebenfalls im Kurzwellenrundfunk, im Grenzwellenbereich, im Amateurfunkdienst und zusätzlich in RFID-Systemen (engl. *radio-frequency identification*) verwendet. Die Wellenlängen in diesem Bereich werden als Ultrakurzwellen oder auch Meterwellen bezeichnet. Der Frequenzbereich von 0,3 - 3 GHz findet insbesondere Anwendung für Fernseher, WLAN, Bluetooth, DVB-T, DVB-T2, DVB-C, DAB+ und für den zellulären Mobilfunk wie GMS und UMTS. Die Strahlen in diesem Frequenzbereich sind als Dezimeterwellen bekannt. Der Frequenzbereich von 3 - 30 GHz wird eingesetzt in Radar, Richtfunk, Satellitenrundfunk, WLAN, RTLS, Short Range Devices und ebenfalls im Amateurfunkdienst. Die Strahlen in diesem Frequenzbereich werden auch als Zentimeterwellen bezeichnet. Ein Frequenzbereich von 3 - 300 GHz wird im Radar, im Richtfunk, im Amateurfunkdienst und im Wireless Gigabit eingesetzt.

Insbesondere sind die bevorzugten Frequenzbereiche unter 3 GHz für WLAN- und Bluetooth Anwendungen dazu geeignet, durch Mobilgeräte, wie beispielsweise Smartphones, Tablets, etc., über elektromagnetische Signale Daten wie Bilder, Videos, Audio, etc. zu übertragen. Durch die erfindungsgemäße Vorrichtung wird vorteilhafterweise ein gezieltes Übertragen und/oder Empfangen solcher Daten möglich.

Besonders bevorzugt deckt der erste und der zweiten Antennarray zum Senden und Empfangen von elektromagnetischen Signalen den THz-Bereich mit ab, sodass dieser auch im 5G-Standard und in modernen 5G-Anwendungen eingesetzt werden kann. Der 5G-Standard wird oftmals in zwei Frequenzbereich FR1 und FR2 (*engl. frequency range*) unterteilt wird, wobei FR1 zwischen 600 MHz und 6 GHz und FR2 zwischen oberhalb von 24 GHz beginnt und im Millimeterwellenbereich arbeitet. Insbesondere erlaubt die Vorrichtung somit eine resourceneffiziente Übertragung von Daten wie Bilder, Dokumente, Musik oder Videos mit modernen Übertragungsstandards.

Die erfindungsgemäßen Antennenarrays können insbesondere in den vorgenannten Frequenzbereichen oder Kombinationen senden und/oder empfangen, sodass die verschiedensten Anwendungen vom verbesserten Beamforming der Vorrichtung profitieren können.

In einer weiteren bevorzugten Ausführungsform ist die erfindungsgemäße Vorrichtung dadurch gekennzeichnet, dass die versendeten und/oder empfangenen elektromagnetischen Signale zur Weiterverarbeitung in Netzwerkgeräten geeignet sind. Dies kann ebenfalls hinsichtlich der Lokalisation genutzt werden, da Netzwerkgeräte Aufschluss über die Position eines Nutzers und/oder eines Objektes geben können. Netzwerkgeräte umfassen Gateways, Router, Netzwerkbrücken, Modems, drahtlose Zugangspunkte, Netzwerkkabel, Leitungstreiber, Switches, Hubs und Repeater, hybride Netzwerkgeräte wie Multilayer-Switches, Protokollkonverter, Brückenrouter, Proxy-Server, Firewalls, Netzwerkadressübersetzer, Multiplexer, Netzwerk-Interface-Controller, drahtlose Netzwerk-Interface-Controller, ISDN-Terminal-Adapter, Ethernet-Adapter und andere zugehörige Hardware und/oder Computer. Netzwerkgeräte umfassen auch Mobiltelefone, Tablet-Computer und sonstige Geräte, die mit dem Internet der Dinge verbunden werden können.

Solche Netzwerkgeräte sind im Stand der Technik bekannt. Insbesondere Geräte wie Mobiltelefone sind besonders gut geeignet, da heutzutage ein ständiges Tragen von Mobiltelefonen nützlich ist und besonders gut genutzt werden kann, um einen Nutzer zu lokalisieren.

In einer weiteren bevorzugten Ausführungsform ist die erfindungsgemäße Vorrichtung dadurch gekennzeichnet, dass das Mikrofonarray und/oder das Lautsprecherarray auf MEMS-Technologie (engl. *microelectromechanical system,* kurz MEMS) basiert. Die so herstellbaren Systeme sind sehr kompakt (Mikrometerbereich) bei gleichzeitig hervorragender Funktionalität und immer geringeren Herstellungskosten. Auf MEMS-Technologie basierende Mikrofone und Lautsprecher können als MEMS-Mikrofone und MEMS-Lautsprecher bezeichnet werden.

Ein MEMS-Lautsprecher oder MEMS-Mikrofon bezeichnet bevorzugt einen Lautsprecher bzw. Mikrofon, welche auf einer MEMS-Technologie basiert und dessen klangerzeugende oder klangaufnehmenden Strukturen mindestens teilweise eine Dimensionierung im Mikrometerbereich (1 µm bis 1000 µm) aufweisen. Bevorzugt kann eine schwingfähige Membran in Breite, Höhe und/oder Dicke eine Dimension im Bereich von weniger als 1000 µm aufweisen.

Die schwingfähige Membran ist bevorzugt zur Erzeugung oder Aufnahme von Druckwellen des Fluids eingerichtet. Bei dem Fluid kann es sich sowohl um ein gasförmiges als auch flüssiges Fluid handeln, bevorzugt handelt es sich um Schalldruckwellen. Ein MEMS-Mikrofon oder MEMS-Lautsprecher wandelt mithin bevorzugt Druckwellen (z.B. akustische Signale als Schallwechseldrücke) in elektrische Signale um oder umgekehrt (Umwandlung elektrischer Signale in Druckwellen, beispielsweise akustische Signale). Mittels der Recheneinheit können bevorzugt die schwingfähige Membran, dessen Schwingungen beispielsweise durch piezoelektrische, piezoresistive oder kapazitives Komponenten an der Membran erzeugt und/oder ausgelesen werden.

Bevorzugt können beispielsweise kapazitive MEMS-Mikrofone in weitreichend automatisierten Prozessen bevorzugt unter Nutzung von Halbleiter-Technologien hergestellt werden. Hierbei können in einem Wafer zunächst Schichten aus unterschiedlichen Materialien abgeschieden werden. Anschließend wird nicht benötigtes Material durch Ätzverfahren entfernt. Auf diese Weise lässt sich eine bewegliche, schwingfähige Membran und ggf. eine Rückwand über einem Hohlraum im Wafer bereitstellen. Die Rückwand kann als starre Struktur ausgebildet werden, die dank Perforation/Öffnungen auch von Luft durchströmt werden kann. Die Membran ist bevorzugt eine hinreichend dünne schwingfähige Struktur, die sich unter dem Einfluss der von den Schallwellen verursachten Luftdruckänderungen durchbiegt. Während die Membran schwingt, bewegt sich die dickere Rückwand nicht, da die Luft durch ihre Öffnungen strömen kann. Die Bewegungen der Membran haben zur Folge, dass sich die Kapazität zwischen ihr und der Rückwand ändert. Diese Kapazitätsänderung kann von einer in das MEMS-Mikrofon eingebauten elektrischen Schaltung, beispielsweise ein ASIC, oder der zentralen Recheneinheit in ein elektrisches Signal umgewandelt werden. Die elektrische Schaltung misst Spannungsänderungen, die entstehen, wenn sich die Kapazität zwischen der Membran und der starren Rückwand ändert, weil sich die flexible Membran unter dem Einfluss der Schallwellen bewegt. Ein Schalleinlass kann sich beispielsweise entweder im Deckel befinden (Top-Port-Ausführung) oder an der Unterseite in der Nähe der Lötflächen (Bottom-Port-Ausführung).

Ein MEMS-Lautsprecher kann wie ein MEMS-Mikrofon aufgebaut sein, jedoch umgekehrt wirken, d. h. ein elektrisches Signal, welches durch die elektrische Schaltung generiert wird, sorgt für eine Bewegung der schwingfähigen Membran, sodass Schall emittiert wird.

MEMS-Mikrofone und/oder MEMS-Lautsprecher zeichnen sich durch ihre einfache und kompakte Bauweise aus, sodass sie sich einfach zu Arrays anordnen lassen und besonders gut geeignet sind, um Beamforming an akustischen Signalen anzuwenden.

Vorzugsweise haben die Mikrofone und die Lautsprecher in ihrer Arrayausgestaltung, insbesondere die MEMS-Mikrofone und die MEMS-Lautsprecher, einen Abstand zueinander, der kleiner als die halbe Wellenlänge des akustischen Signals ist, insbesondere um das Nyquist-Shannon-Abtasttheorem zu erfüllen.

Die MEMS-Technologie erlaubt hierbei vorzugsweise eine Vielzahl von MEMS-Lautsprechern und/oder MEMS-Mikrofonen, beispielsweise 5, 10, 20, 50, 100 oder 500 oder mehr, in beliebiger Formation als ein Array anzuordnen und vorteilhaft die beschriebenen Lokalisierungsverfahren wie z.B. AOA, TOA, TDOA etc. für ein Beamforming zu verwenden.

In einer weiteren bevorzugten Ausführungsform ist die erfindungsgemäße Vorrichtung dadurch gekennzeichnet, dass das Antennenarray zum Empfangen und/oder zum Senden von elektromagnetischen Signalen Phased-Array-Antennen umfasst.

Eine Phased-Array-Antenne bezeichnet bevorzugt eine Gruppenantenne, deren einzelnen Strahler mit unterschiedlicher Phasenlage gespeist werden können. Im Resultat kann das gemeinsame Antennendiagramm elektronisch geschwenkt werden. Die elektronische Schwenkung ist vorteilhafterweise sehr viel flexibler und wartungsärmer als eine mechanische Schwenkung der Antenne. Das entscheidende Prinzip bei Phased-Array-Antennen ist das der Interferenz, d. h. eine phasenabhängige Überlagerung von zwei oder (meist) mehreren Strahlern. Das bedeutet, dass sich gleichphasige Signale verstärken und gegenphasige Signale gegenseitig auslöschen. Wenn also zwei Strahler im gleichen Takt ein Signal aussenden, so wird eine Überlagerung erzielt - das Signal wird in der Hauptrichtung verstärkt und in den Nebenrichtungen abgeschwächt. Wenn nun das auszustrahlende Signal durch eine die Phase regelnde Baugruppe geleitet wird, kann also die Abstrahlrichtung elektronisch gesteuert werden. Das ist in der Regel nicht unbegrenzt möglich, weil die Effektivität dieser Antennenanordnung in einer senkrecht zum Antennenfeld liegenden Hauptrichtung am größten ist, während bei einer extremen Schwenkung der Hauptrichtung die Anzahl und die Größe der unerwünschten Nebenkeulen steigt, während gleichzeitig die effektive Antennenfläche verkleinert wird. Mit dem Sinussatz kann die nötige Phasenverschiebung errechnet werden. Es können beliebige Antennenkonstruktionen als Strahler in einem Antennenfeld verwendet werden. Für eine Phased-Array-Antenne ist von Bedeutung, dass die einzelnen Strahler mit einer geregelten Phasenverschiebung angesteuert werden und somit die Hauptrichtung der Abstrahlung verändert wird. Um eine Bündelung sowohl horizontal als auch vertikal zu erreichen, werden vorzugsweise viele Strahler in einem Antennenfeld verwendet.

Der Einsatz von Phased-Array-Antennen für elektromagnetische Signale bringt diverse Vorteile mit sich. Unter anderem liefern Phased-Array-Antennen einen hohen Antennengewinn bei gleichzeitig großer Nebenkeulendämpfung. Der Antennengewinn fasst die Richtwirkung und den Wirkungsgrad einer Antenne zusammen. Des Weiteren ist sehr vorteilhaft, dass ein schneller Wechsel der Strahlrichtung im Mikrosekundenbereich möglich ist. Was auch von großem Vorteil ist, dass die Diagrammformung, insbesondere die Diagrammumformung, sehr schnell passiert, was auch als Beam agility bekannt ist. Zudem können Phased-Array-Antennen eine beliebige Abtastung eines Raumes oder eines Raumbereiches umfassen. Zudem haben Phased-Array-Antennen eine frei wählbare Zielbeleuchtungsdauer, sodass ein dauerhaftes und zuverlässiges Abstrahlen von elektromagnetischen Signalen ermöglicht wird. Es ist ebenfalls erwähnenswert, dass durch das gleichzeitige Erzeugen von mehreren Strahlen ein Multifunktionsbetrieb durchführbar ist. Von großem Vorteil ist es hierbei, dass der Ausfall einer einzelnen Komponente nicht zwangsläufig zu einem kompletten Ausfall des Systems führt.

Phased-Array-Antennen können als lineare und/oder als planare Arrays ausgebildet sein.

Die linearen Phased-Array-Antennen umfassen Zeilen, die gemeinsam über einen Phasenschieber gesteuert werden. Daher wird nur ein Phasenschieber pro Antennenzeile benötigt. Eine Vielzahl senkrecht übereinander angeordneter linearer Arrays bilden eine ebene Antenne. Vorteilhafterweise ergibt sich hierdurch eine besonders einfache Anordnung. Allerdings ist eine Strahlschwenkung zumeist nur in einer Ebene möglich.

Die planaren Phased-Array-Antennen werden bevorzugt vollständig aus Einzelelementen mit jeweils einem Phasenschieber pro Element umfasst. Jeder Einzelstrahler benötigt einen eigenen Phasenschieber. Die Elemente werden wie in einer Matrize angeordnet, die ebene Anordnung aller Elemente bildet die gesamte Antenne. Vorteilhafterweise erfolgt hierbei eine Strahlschwenkung in zwei Ebenen.

Zudem ist auch die frequenzabhängige Strahlschwenkung bekannt, welche ein Sonderfall der Phased-Array-Antenne darstellt, bei welcher die Strahlschwenkung völlig ohne Phasenschieber durch die Sendefrequenz gesteuert wird. Die Strahlschwenkung ist hierbei eine Funktion der Frequenz. Eine vertikale Antennengruppe wird seriell gespeist. Auf einer bestimmten Grundfrequenz erhalten alle Strahler eine Leistung gleicher Phase durch konstruktiv gleiche Umwegleitungen, die eine Phasenverschiebung von n*360° bewirken. Alle Strahler strahlen also mit gleicher Phase zur gleichen Zeit. Der resultierende Strahl befindet sich somit senkrecht zur Antennenebene. Wenn die Sendefrequenz um wenige Prozent erhöht wird, stimmt aber die konstruktiv festgelegte Länge der Umwegleitungen nicht mehr. Die Umwegleitung ist nun etwas zu lang. Es tritt eine Phasenverschiebung von Strahler zu Strahler auf. Der erste Strahler strahlt diese wenigen Prozent eher als der nächste benachbarte Strahler usw. Der resultierende Strahl ist also um einen gewissen Winkel nach oben geschwenkt. Diese Art der Strahlschwenkung ist vorteilhafterweise sehr einfach aufgebaut.

Vorzugsweise können auch sogenannte Smart Reflektoren (*deutsch: intelligente Reflektoren*) für die Übertragung von elektromagnetischen Signalen zum Einsatz kommen und von der erfindungsgemäßen Vorrichtung genutzt werden. Smart Reflektoren sind unter weiteren Begriffen bekannt, wie beispielsweise Reconfigurable Intelligent Surfaces (RISs), Intelligent Reflecting Rurfaces (IRSs) und/oder Large Intelligent Metasurfaces. Smart Reflektoren bezeichnen bevorzugt reflektierende Oberflächen, die wie reflektierende Antennen wirken. Smart Reflektoren werden bevorzugt aus Metamaterial hergestellt, welches eine künstlich hergestellte Struktur bezeichnet, deren Durchlässigkeit für elektrische und magnetische Felder, d.h. deren elektrische Permittivität (ε(w)) oder magnetischen Permabilität (µ(w)), frequenzabhängig und anwendungsorientiert eingestellt werden kann. Insbesondere können strukturierte Metamaterialien somit elektromagnetischen Eigenschaften aufweisen, welche bei natürlichen Materialien nicht anzufinden sind. Dies wird bevorzugt erreicht durch speziell angefertigte, meist periodische, mikroskopisch feine Strukturen (Einheitszellen, Elementarzellen) aus elektrischen oder magnetisch wirksamen Materialien. Die optischen Eigenschaften, insbesondere die Reflexionseigenschaften von Smart Reflektoren werden durch elektrische Bauelemente wie beispielsweise pin-Dioden oder Kapazitätsdioden reguliert. Bevorzugt wird ein Array aus Smart Reflektoren gebildet, wobei jeder einzelne Smart Reflektor eines Arrays elektromagnetische Signale unter anderem in ihrer Phase, Amplitude, Frequenz und/oder Polarisation verändern kann. Analog zu Phased-Array-Antennen kann durch die Phasenverschiebung mittels Interferenz eine Bündelung und damit ein Beamforming der elektromagnetischen Signale erfolgen.

In einer weiteren bevorzugten Ausführungsform ist die erfindungsgemäße Vorrichtung dadurch gekennzeichnet, dass die Vorrichtung einen digitalen Filter umfasst. Vorteilhafterweise wird die Qualität der Vorrichtung bzw. der gesendeten und/oder empfangenen Signale durch digitale Filter erhöht. Ein digitaler Filter ist ein mathematischer Filter zur Manipulation eines Signals, wie beispielsweise das Sperren oder Durchlassen eines bestimmten Frequenzbereiches. Digitale Filter werden zumeist mit Logikbausteinen wie ASICs (anwendungsspezifische integrierte Schaltung, *engl. application-specific integrated circuit,*)*,* FPGAs (*engl. Field Programmable Gate Array*) oder in Form eines sequentiellen Programmes mit einem Signalprozessor realisiert. Digitale Filter verarbeiten bevorzugt keine kontinuierlichen Signale, sondern zeit- und wertdiskrete Signale. Ein zeitdiskretes Signal besteht in der zeitlich periodischen Abfolge nur aus einzelnen Impulsen, welche den Signalverlauf über die Zeit darstellen, den jeweiligen Abtastwerten. Der Abtastwert ist wertdiskret, da die digitale Zahlendarstellung nur eine endliche Auflösung bietet. Digitale Filter haben gegenüber analogen Filtern den Vorteil, dass ihre technischen Daten jederzeit exakt eingehalten werden. Insbesondere erfolgen keine Schwankungen durch die Toleranz der Bauteile, wodurch sie besonders zuverlässig sind. Von Vorteil ist auch, dass keine Alterung der Bauteile stattfindet. Zudem werden Filterfunktionen, die mit Analogfiltern nur schwer oder gar nicht realisierbar sind, beispielsweise Filter mit linearer Phase, mit digitalen Filtern ermöglicht.

Bevorzugt kann es sich bei dem digitalen Filter beispielsweise um FIR- und/oder IRR-Filter handeln. Ein Fachmann ist im Gebrauch und in der Anwendung digitaler Filter zur Verbesserung der empfangenen und/oder gesendeten elektromagnetischen und/oder akustischen Signale durch die Vorrichtung in Kombination mit der Recheneinheit vertraut und kann mithilfe dieser digitalen Filter bewusst die elektromagnetischen und/oder akustischen Signale in ihrer Verarbeitung steuern und/oder regeln. Insbesondere können durch die beschriebenen digitalen Filter für gezielte Anwendungen Frequenzbereiche durchgelassen werden. Damit erhöht sich die Qualität des Beamformings auf die wählbare Spezifikation auf einen festen Frequenzbereich.

Es kann ebenfalls bevorzugt sein, dass die Vorrichtung analoge Filter umfasst. Analoge Filter verarbeiten vorzugsweise die Signale zeit- und amplitudenkontinuierlich. Sie dienen entweder der Formung von Signalen in einem gewünschten Sinne und/oder zur Signalanalyse, also insbesondere zur Feststellung, welche Frequenzen vertreten sind. Vorteilhafterweise weisen analoge Filter eine geringe Latenzzeit auf. Zudem stellen sie zeitkontinuierliche Systeme dar, sodass keine Limitierung durch die Abtastrate wie in zeitdiskreten Systemen erfolgt. Analoge Filter können mechanisch arbeiten, beispielsweise als Schwinger, Dämpfer (z. B. Stoßdämpfer), Resonator und/oder Feder mit bestimmter Eigenschwingung. Auch elektronische Arbeitsweisen können von analogen Filtern umfasst sein, beispielsweise wenn sie aufgebaut sind aus Induktivitäten (Spulen), Kapazitäten (Kondensatoren), aktiven Komponenten wie Operationsverstärker, Switched-Capacitor-Filter (SC-Filter), Hohlraumresonator Filter, Dielektrische Filter, Netzfilter usw. Auch Mischkonzepte dieser Arbeitsweisen können in der erfindungsgemäßen Vorrichtung eingebaut sein, d. h. elektromechanische analoge Filter, wie beispielsweise piezoelektrische Filter umfassend Quarzfilter und/oder SAW-Filter (Akustische-Oberflächenwellen-Filter).

In einer weiteren bevorzugten Ausführungsform ist die erfindungsgemäße Vorrichtung dadurch gekennzeichnet, dass das Mikrofonarray, das Lautsprecherarray und die Antennenarrays innerhalb eines Moduls eingebaut vorliegen. Es ist auch bevorzugt, dass die Recheneinheit innerhalb des Moduls eingebaut vorliegt. Vorzugsweise ist eine Software auf der Recheneinheit vorgesehen, die die Berechnungen, insbesondere hinsichtlich der Lokalisation sowie der Formung der Beamprofile, durchführt. Es kann auch bevorzugt sein, dass die Rechnungen, insbesondere die rechenintensiven Schritte, über eine IT-Infrastruktur, vorzugsweise von einer Cloud, durchgeführt werden.

In einer weiteren bevorzugten Ausführungsform ist die erfindungsgemäße Vorrichtung dadurch gekennzeichnet, dass das Modul eine Dimension von 1 cm - 100 cm, bevorzugt 5 cm bis 80 cm aufweist. Vorteilhafterweise ergibt sich durch diese Dimensionierung eine kompakte und einfache Bauweise. Es ist besonders vorteilhaft, dass alle Bauteile innerhalb eines Moduls eingebaut sind, sodass das Beamforming von elektromagnetischen und/oder akustischen Signalen in Kombination erfolgt.

Von Vorteil ist diese kompakte Dimensionierung auch dahingehend, da sie einfach in Räumen und/oder Gebäuden befestigt werden kann und insbesondere in ihrer Handhabung robust ist. Dabei kann die erfindungsgemäße Vorrichtung verteilt an einer Wand, einer Decke, einem gesamten Raum, in der Nähe eines Telefons und/oder sogar vom Nutzer selbst getragen werden.

Im Sinne der Erfindung bezeichnet ein Modul bevorzugt eine Einheit, in der das erste Antennenarray, das zweite Antennenarray, das Mikrofonarray, das Lautsprecherarray und die Recheneinheit untergebracht sind. Die Komponenten können, aber müssen nicht, sich innerhalb eines Gehäuses befinden und/oder sich auf einer Trägerplatte befinden.

Gleichzeitig ist die Vorrichtung bevorzugt groß genug, um mindestens ein Antennenarray, ein Lautsprecherarray und ein Mikrofonarray bereitzustellen, welche sowohl in Bezug auf akustische Signale als auch elektromagnetische Signale ein besonders präzises Beamforming ermöglichen.

In einer weiteren bevorzugten Ausführungsform ist die erfindungsgemäße Vorrichtung dadurch gekennzeichnet, dass die Vorrichtung akustische Signale zur Geräuschkompensation aussendet. Bevorzugt kann die erfindungsgemäße Vorrichtung durch die obig beschriebenen Verfahren störende Schallquellen lokalisieren. Vorzugsweise kann hierbei nicht nur das Mikrofonarray zum Einsatz kommen, um auf Basis der akustischen Signale Störquellen zu identifizieren. Auch das (erste) Antennenarray kann zur Lokalisation beitragen, da viele Geräuschquellen (elektronische Geräte, Radios, telefonierende Personen etc.) ebenfalls über elektromagnetische Signale geortet werden können. Das Lautsprecherarray sendet mittels Beamforming bevorzugt jene akustische Signale aus, die den störenden Schall hemmen oder senken. Vorzugsweise ist das gesendete akustische Signal dafür konfiguriert, mittels destruktiver Interferenz (Antischall) den störenden Schall auszulöschen.

Es ist ein bekanntes Phänomen, dass beispielsweise in Großraumbüros viele Gespräche stattfinden, die während eines Telefongespräches oder während einer Telefon- und/oder Videokonferenz stören. Daher ist das Aussenden von akustischen Signalen zur Geräuschkompensation in diesem Rahmen besonders vorteilhaft, um die Geräuschkulisse zu minimieren. Ein Problem für die vom Störschall Betroffenen ist, dass in vielen Fällen eine Ortung der Schallquelle bzw. die Feststellung der Richtung, aus der der Schall einfällt, nicht möglich ist. Dabei überlagern sich hin- und zurücklaufende Wellen und können sich gegenseitig verstärken oder ganz bzw. teilweise aufheben. Dies führt zu sehr starken Schalldruckpegelanhebungen an bestimmten Stellen des Raumes. Es kommt zu einer starken Orts-, Frequenz- und Zeitabhängigkeit des Schallfeldes. Üblicherweise sind dabei die Schallpegel vor Wänden und in Raumecken besonders laut. Die herkömmlichen passiven Lärmschutzmaßnahmen, wie zum Beispiel Schalldämpfer, Schwingungsdämpfer, Schallschutzwände und Lärmschutzzäune, sind insbesondere für tiefe Frequenzen nur bedingt geeignet. Bessere Dämpfungsergebnisse sind mit aktiven Dämmmaßnahmen, welche einen Antischall zur Geräuschkompensation aussenden, erreichbar. Beispielsweise kann durch das Aussenden eines Antischall-Signals durch das Lautsprecherarray die Geräusche bzw. die Schallwellen gedämpft und/oder vollständig ausgelöscht werden. Das Grundprinzip der aktiven Lärmkompensation ist das gezielte Herbeiführen einer destruktiven Interferenz. Dazu wird bevorzugt ein Gegensignal erzeugt, das dem des störenden Schalls entspricht, aber eine entgegengesetzte Polarität aufweist. Mittels der erfindungsgemäßen Vorrichtung kann zum einen das Störsignal und dessen Verortung besonders präzise ermittelt werden. Zum anderen erlaubt das Beamforming mittels des akustischen Lautsprecherarrays auf Basis der Informationen der Antennenarrays eine besonders effektive Emission von Antischall zur Geräuschkompensation.

In einem weiteren Aspekt betrifft die Erfindung ein System umfassend zwei oder mehr der erfindungsgemäßen Vorrichtungen.

Das System kann bevorzugt als ein Verbund einer Vielzahl von erfindungsgemäßen Vorrichtungen gesehen werden, welches die Fähigkeiten und Ressourcen der erfindungsgemäßen Vorrichtung vereinigt, um ein System zu schaffen, welches mehr Funktionalität bietet als die Summe der Einzelvorrichtungen, welches es umfasst.

Das System kann bevorzugt einen großen Bereich überdecken, sodass das System sich vorteilhafterweise mit einer hohen Zahl an Netzwerkgeräten verbinden kann. Somit kann das System auch gleichzeitig mehrere Netzwerkgeräte/Nutzer besonders gut und genau lokalisieren, ohne Einbußen insbesondere hinsichtlich der Genauigkeit der Lokalisation hinzunehmen. Dabei können mehrere gleiche und/oder verschiedene Ortungsverfahren eingesetzt werden, um eine Position zu bestimmen. Beispielsweise kann das AoA-Verfahren für akustische Signale und das AoA-Verfahren für elektromagnetische Signale eingesetzt werden, sodass eine Überlagerung von diesen beiden Lokalisationsverfahren erfolgt. Dabei sorgen die akustischen Signale bevorzugt für eine grobe Schätzung der Position und die elektromagnetischen Signale bevorzugt für eine feinere Schätzung der Position. Hierdurch ergibt sich vorteilhafterweise eine besonders genaue Bestimmung der Position.

Dabei kann es auch von Vorteil sein, dass die Vorrichtungen selbst sich untereinander verbinden und "kommunizieren" können, um sich beispielweise bei komplexen Berechnungen gegenseitig zu unterstützen. Damit können vorteilhafterweise komplexe Berechnungen mit einer höheren Geschwindelt durchgeführt.

Die Vorrichtungen des Systems können ihrerseits bevorzugt auch vollständig autark nutzbar sein, d.h. sie können auch unabhängig voneinander in Betrieb gehen und genutzt werden. Somit ist es insbesondere vorteilhaft, dass auch Vorrichtungen vom System entfernt oder hinzugefügt werden können, um das System an die jeweiligen Anforderungen anzupassen. Während eines Lebenszyklus können auf der Basis von Erfahrungen Funktionen - und damit auch Teilsysteme - zu einem System hinzugefügt, entfernt oder geändert werden. Vorteilhafterweise ist das erfindungsgemäße System somit individuell anpassbar an verschiedene Situationen. Denkbar ist dies beispielsweise, sofern sich ein Raum oder dessen Einrichtung oder Austattung aufgrund von Bau- und Renovierungsarbeiten oder Umgestaltungsplänen ändert, dass das System umfassend die zwei oder mehr Vorrichtungen ebenso angepasst wird, um in Bezug auf die Anforderungen - beispielsweise für ein Freisprechen im Großraumbüro - stets optimal eingestellt ist.

Der durchschnittliche Fachmann erkennt, dass technische Merkmale, Definitionen und Vorteile bevorzugter Ausführungsformen, welche für die erfindungsgemäße Vorrichtung offenbart wurden, gleichermaßen für das System umfassend zwei oder mehr Vorrichtungen gelten, und umgekehrt.

Kennzeichnendes Merkmal des Systems ist darüber hinaus dessen bevorzugt emergentes Verhalten infolge des Zusammenspiels mehrerer Vorrichtungen. Übertragen auf das System bedeutet das, dass durch den Zusammenschluss der erfindungsgemäßen Vorrichtung bestimmte Eigenschaften und Dienstleistungen für den Nutzer herausgebildet werden, die nicht mehr eindeutig bestimmten Teilsystemen zugeordnet werden können. Insbesondere hinsichtlich der Ermittlung der Lokalisation bietet das System genauere Resultate. Im Speziellen kann das System dafür eingesetzt werden, die Position von mehreren Nutzern mit einer hohen Genauigkeit zu bestimmen. Auch in Bezug auf das Aussenden von Antischall-Signalen ist das System vorteilhaft, da insbesondere Störschall aus mehreren verschiedenen Quellen mittels einer Mehrzahl von räumlich verteilten Lautsprecherarrays gedämpft und/oder gesenkt werden kann. Zudem kann es bevorzugt sein, dass durch die Mikrofonarrays empfangene akustische Signale sich selbst überlagern, um stärkeren Störschall zu verringern. Das Senden und/oder Empfangen von elektromagnetischen und/oder akustischen Signalen erfolgt hierbei bevorzugt mittels Beamforming und dessen inhärenter Richtwirkung.

In einer weiteren bevorzugten Ausführungsform ist das System dadurch gekennzeichnet, dass das System an einer Wand und/oder einer Decke eines Raums, bevorzugt eines Büros, besonders bevorzugt innerhalb eines Großraumbüros angebracht ist. Insbesondere der Lärmpegel innerhalb eines Großraumbüros ist für die Angestellten, die in diesem Großraumbüro ihrer Arbeit nachgehen, ein großer Störfaktor. Diese entstehen beispielsweise durch Gespräche zwischen anderen Mitarbeitern, Telefongespräche, Videokonferenzen etc. Großraumbüros zeichnen sich mitunter dadurch aus, dass es sich um einen Raum mit großer Grundfläche (vorzugsweise mehr als 100 m², mehr als 200 m² oder auch mehr als 300 m² handelt, in dem sich eine Vielzahl von Büroarbeitsplätzen befinden. Großraumbüros sind oft durch mittelhohe Raumteiler in Zellen und Gänge unterteilt. Die Zellen, welche durch die Unterteilung resultieren, enthalten einen oder mehrere Arbeitsplätze, was gerade zu der hohen Geräuschkulisse führt, da es im Gegensatz zu Einzelbüro mit verschließbaren Türen keine akustische Trennung von Arbeitsplätzen gibt. In Großraumbüros können extra-aurale - nicht das Gehör betreffende - Lärmwirkungen die Folge sein, wie z. B. Stress, eine geringere Leistungsfähigkeit oder eine höhere Fehlerrate. Deshalb ist das Anbringen des Systems in einem Großraumbüro besonders vorteilhaft, um durch das gezielte Aussenden von Antischall-Signalen eine störende Geräuschkulisse zu minimieren und/oder zu dämpfen.

In einer weiteren bevorzugten Ausführungsform ist das System dadurch gekennzeichnet, dass das System 2, 3, 4, 5, 10, 20, 50 oder mehr Vorrichtungen umfasst, wobei die Vorrichtung bevorzugt in einem Abstand von 1 m bis 20 m, vorzugsweise 1 m bis 10 m vorliegen. Die genaue Anzahl der vom System umfassten Vorrichtungen kann vom Fachmann je nach Situation und Anpassungswünschen der Nutzer optimiert werden. Insbesondere kann somit das System an unterschiedlich große Decken und/oder Wänden von Räumen angebracht werden. Dabei kann das System beispielsweise linear entlang einer Geraden und/oder in einer matrixähnlichen Form entlang einer Ebene angebracht sein. Auch nicht-periodische Anordnungen, welche auf die räumlichen und/oder physikalischen Gegebenheiten des Raums, der Decke und/oder der Wände, abgestimmt sind, können zum Einsatz kommen.

In einer weiteren bevorzugten Ausführungsform ist das System dadurch gekennzeichnet, dass Reflektoren für elektromagnetische und/oder akustische Signale an einem Objekt, Nutzer und/oder einer Fixposition in einem Raum, beispielsweise an einer Wand oder einer Decke, angebracht sind.

Es kann bevorzugt sein, dass als Reflektoren für die elektromagnetischen Signale Retroreflektoren eingesetzt werden. Für elektromagnetische Signale und/oder Radaranwendungen ist hier auch der Ausdruck Radarreflektor üblich. Vorzugsweise sind solche Retroreflektoren als Tripelspiegel konstruiert. Sie erzeugen ein besonders starkes Echosignal und somit ein sicheres Zielzeichen für Objekte, die ansonsten nur über eine sehr geringe oder instabile effektive Reflexionsfläche verfügen. Insbesondere werden Retroreflektoren nach quasioptischen Prinzipien konstruiert und verwenden meist die Spiegelreflexion (Reflexion an glatten Flächen), aber auch die Brechung und Beugung zur Erzeugung einer effektiven Reflexionsfläche.

Es kann auch bevorzugt sein, dass Winkelreflektoren als Reflektoren für elektromagnetische Signale eingesetzt werden. Winkelreflektoren bestehen im Grundelement aus zwei oder drei im Winkel von exakt 90° zueinanderstehenden elektrisch leitenden Flächen. Aus diesem Grundelement werden verschiedene Formen von Winkelreflektoren konstruiert. Winkelreflektoren mit drei Flächen reflektieren Funkwellen und Mikrowellenstrahlung in genau die Richtung, aus der die Quellstrahlung erfolgt, ohne dass sie wie ein Spiegel senkrecht dazu ausgerichtet sein müssen.

Ebenso kann es bevorzugt sein, dass Lüneburg-Linsen als Reflektoren für elektromagnetische Signale eingesetzt werden. Lüneburg-Linsen sind kugelförmige Gradientenindexlinsen. Sie bestehen aus einer massiven Kugel aus verlustfreiem dielektrischem Material mit ortsabhängiger Dielektrizitätskonstante. Wenn ihre Rückseite verspiegelt ist, wirft sie einfallende parallele Wellen genau in Richtung ihrer Quelle zurück.

Es kann ebenfalls bevorzugt sein, dass Reflektoren für akustische Signale eingesetzt werden. In Räumen mit hohen akustischen Anforderungen muss der Schall so gelenkt werden, dass die Hörsamkeit in einem möglichst großen Bereich gut ist. Nach DIN 18041: 2016-03 bezeichnet die Hörsamkeit die Eignung eines Raumes für bestimmte Schalldarbietungen. In der Raumakustik gilt es oftmals, für die von den Schallquellen produzierten Schallenergien Sorge zu tragen. Erst wenn die Schallenergie zu stark ist und beispielsweise zu spät nach dem Direktschall eintrifft, werden Flächen eingesetzt, um den Schall zu absorbieren. Das Ziel der Lenkung des Schalls wird erreicht, wenn gezielt Flächen eingesetzt werden, um den Schall zu reflektieren oder allenfalls zu streuen, und dies mit möglichst wenig Energieverlust. Hierbei können Wand-, Boden- und Deckenflächen als auch frei hängende und/oder von Nutzern tragbare Reflektoren bevorzugt sein. Dabei müssen die Reflektoren gewisse Bedingungen erfüllen, um wirksam zu sein.

Aufgrund der Wellennatur des Schalls wirkt eine Fläche nur für Frequenzen oberhalb einer Grenzfrequenz als Reflektor. Tieffrequente Schallwellen, also große Wellenlängen "sehen" kleine Reflektoren gar nicht. Je grösser die von der einfallenden Schallwelle "sichtbare" Fläche ist, umso tiefer ist diese Grenzfrequenz.

Für den Frequenzbereich oberhalb der Grenzfrequenz kann die Schallreflexion nach den gleichen Gesetzen wie in der geometrischen Optik gezeichnet werden: Einfallswinkel = Ausfallswinkel. Die Raumflächen oder frei hängenden Reflektoren sind entsprechend den akustischen Erfordernissen auszurichten, somit ist die geometrische Ausrichtung des Reflektors ebenfalls entscheidend.

Des Weiteren ist das Flächengewicht ein wichtiger Parameter. Je tiefere Töne noch reflektiert werden sollen, umso schwerer muss ein Reflektor sein. Für Sprache genügen vorzugsweise 10 kg/m², für Musikinstrumente mittlerer Tonlagen sind bevorzugt 20 kg/m² notwendig. Für Musik im Allgemeinen ist besonders bevorzugt ein Flächengewicht von 40 kg/m² zu beachten. Der letzte Wert gilt z. B. für eine Podiumsbegrenzung in einem Konzertsaal und für sämtliche Flächen, falls der Konzertsaal mit Holz ausgekleidet wird.

Zudem ist auch die Oberflächenstruktur des Reflektors wichtig. Schall, der auf eine Oberflächenstruktur mit einer bestimmten Tiefe s auftrifft, wird je nach Frequenz auf verschiedene Arten reflektiert. Tiefe Frequenzen, also Wellenlängen größer als s, "sehen" die Tiefe des Reflektors nicht und werden quasi an der Fläche spiegelartig reflektiert. Hohe Frequenzen dagegen werden von den Tiefen der Oberfläche gespiegelt. Frequenzen, deren Wellenlänge in der gleichen Größenordnung liegen wie s, werden in verschiedene Richtungen gestreut. Damit der Schall auch bei mittleren und tiefen Frequenzen gestreut wird, sind relativ große Strukturtiefen s notwendig. Daher kann eine stark unregelmäßige Form der Oberfläche des Reflektors vorteilhaft sein.

In einem weiteren Aspekt betrifft die Erfindung ein Verfahren zum Senden, Empfangen und Verarbeiten von elektromagnetischen und akustischen Signalen mit Hilfe der erfindungsgemäßen Vorrichtung dadurch gekennzeichnet, dass ein Senden und Empfangen der elektromagnetischen und/oder akustischen Signale durch die Vorrichtung und/oder das System mittels Beamforming erfolgt, wobei für das Beamforming eine kombinierte und/oder wechselseitige Verarbeitung elektromagnetischer und/oder akustischer Signale vorgenommen wird.

In bevorzugten Ausführungsformen betrifft die Erfindung ein Verfahren zum Senden, Empfangen und Verarbeiten von elektromagnetischen und akustischen Signalen mit Hilfe einer beschriebenen Vorrichtung oder beschriebenem System dadurch gekennzeichnet, dass
- ein Senden und/oder Empfangen von akustischen Signalen durch die Vorrichtung (10) oder das System mittels Beamforming erfolgt, wobei für das Beamforming eine Verarbeitung von empfangenen elektromagnetischen Signalen vorgenommen wird,
- ein Senden und/oder Empfangen von elektromagnetischen Signalen durch die Vorrichtung (10) oder das System mittels Beamforming erfolgt, wobei für das Beamforming eine Verarbeitung von empfangenen akustischen Signalen vorgenommen wird und/oder
- ein Senden und/oder Empfangen von elektromagnetischen und/oder akustischen Signalen durch die Vorrichtung oder das System mittels Beamforming erfolgt, wobei für das Beamforming eine Verarbeitung von empfangenen akustischen und elektromagnetischen Signalen vorgenommen wird.

Der durchschnittliche Fachmann erkennt, dass technische Merkmale, Definitionen und Vorteile bevorzugter Ausführungsformen, welche für die erfindungsgemäße Vorrichtung offenbart wurden, gleichermaßen für das Verfahren zum Senden, Empfangen und Verarbeiten von elektromagnetischen und akustischen Signalen mit Hilfe der erfindungsgemäßen Vorrichtung gelten, und umgekehrt.

Insbesondere hinsichtlich der Lokalisierung wird erfindungsgemäß vorteilhafterweise eine höhere Genauigkeit erreicht. Hierbei werden beide Signalarten für die Positionsbestimmung verwendet. Akustische Signale erlauben eine gute Grobschätzung der Position, während elektromagnetische Signale für eine gute Feinschätzung geeignet sind. Beispielsweise können durch eine Grobschätzung durch die akustischen Signale die Antennenarrays für die elektromagnetischen Signale auf die Quelle gerichtet werden, wobei die Verarbeitung durch die akustischen Signale bedingt durch die grobe Schätzung eine hohe Fehlertoleranz hinsichtlich der Positionsbestimmung bevorzugt aufweist. Die Antennenarrays, die für das Beamforming der elektromagnetischen Signale verantwortlich sind, können dann auf den Bereich ausgerichtet werden, welcher durch die akustischen Signale ermittelt wurde. Durch das Verarbeiten der elektromagnetischen Signale wird die Fehlertoleranz nochmal verringert und die Position somit genauer bestimmt.

Auch beispielsweise in Bezug auf eine Optimierung der Rechenleistung, der gezielten Übertragung von Stereoeffekten oder einer Geräuschkompensation entfaltet das erfindungsgemäße Verfahren unter wechselseitiger und/oder kombinierter Verarbeitung der beiden Signalarten die im Zusammenhang mit der Vorrichtung beschriebenen Vorteile.

Die erfindungsgemäße Vorrichtung und das erfindungsgemäße System sollen im Folgenden anhand von Beispielen näher erläutert werden, ohne auf diese Beispiele beschränkt zu sein.

### FIGUREN

### Kurzbeschreibunq der Abbildung

- **Fig. 1**: Schematische Darstellung der erfindungsgemäßen Vorrichtung
- **Fig. 2**: Schematische Darstellung des erfindungsgemäßen Systems
- **Fig. 3**: Weitere schematische Darstellung des erfindungsgemäßen Systems

### Detaillierte Beschreibung der Abbildungen

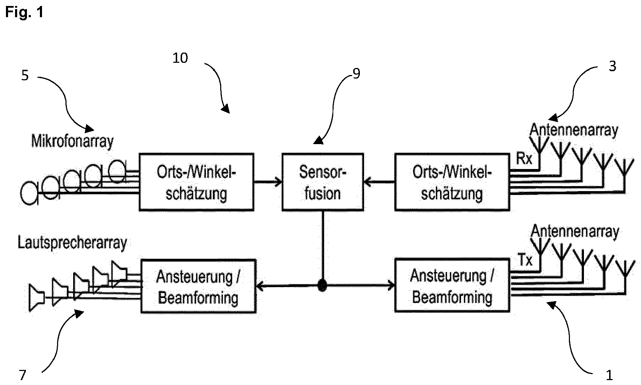

**Fig. 1** zeigt eine schematische Darstellung und Wirkungsweise der erfindungsgemäßen Vorrichtung **10**. Ein erstes Antennenarray **1** ist dazu ausgebildet, um elektromagnetische Signale auszusenden, während ein zweites Antennenarray **3** zum Empfangen von elektromagnetischen Signalen dient. Mithilfe eines Mikrofonarrays **5** können akustische Signale empfangen werden, während durch ein Lautsprecherarray **7** akustische Signale versendet werden können. Eine Recheneinheit **9** kann die aufgenommen elektromagnetischen und/oder akustischen Signale mittels Sensorfusion wechselseitig und/oder kombiniert verarbeiten. Der Ausdruck Sensorfusion vermittelt bevorzugt, dass aufgenommene Signale aus unterschiedlichen Sensorarrays, nämlich dem zweiten Antennenarray **3** und dem Mikrofonarray **5**, verarbeitet werden.

Bevorzugt wird mithilfe der empfangenen akustischen Signale durch das Mikrofonarray **5** eine Grobschätzung der Position eines Nutzers vorgenommen. Über die obig beschriebenen Methoden kann eine Schätzung der Position über eine Abstands- und/oder Winkelberechnung erfolgen. Eine feinere Schätzung oder Berechnung der Position ergibt sich durch empfangene elektromagnetische Signale durch das zweite Antennenarray **3**. Dies kann ebenfalls durch die Berechnung eines Abstandes bzw. Ortes und/oder des Winkels der eingefallenen elektromagnetischen Signale erfolgen.

Durch die Arrayanordnungen, insbesondere durch das erste Antennenarray **1** zum Senden von elektromagnetischen Signalen und durch das Lautsprecherarray **7** zum Senden von akustischen Signalen können diese Signalarten mittels Beamforming einen Nutzer besonders präzise ansteuern und gezielt erreichen.

Die Ausdrücke "Rx" und "Tx" bedeuten in der Abbildung "receiving" und "transmitting", d. h. "empfangen" und "senden".

Bevorzugt bezeichnet eine wechselseitige Verarbeitung durch die erfindungsgemäße Vorrichtung **10**, dass durch das Mikrofonarray **5** aufgenommene akustische Signal dazu verwendet werden können, elektromagnetische Signale durch das erste Antennenarray **1** zu versenden. Ebenfalls ist das Senden von akustischen Signalen durch das Lautsprecherarray **7** auf Basis von empfangenen elektromagnetischen Signalen durch das zweite Antennenarray **3** von einer wechselseitigen Verarbeitung durch die Recheneinheit **9** umfasst. Insbesondere kann die wechselseitige Verarbeitung von elektromagnetischen und akustischen Signalen dazu verwendet werden, um eine genauere und schnellere Bestimmung der Position zu ermitteln.

Ebenso kann die erfindungsgemäße Vorrichtung **10** die elektromagnetischen und akustischen Signale kombiniert verarbeiten. Insbesondere können elektromagnetische und akustische Signale auf Basis von akustischen Signalen oder auf Basis von elektromagnetischen Signalen ausgesendet werden. Es kann auch von einer kombinierten Verarbeitung das Senden von elektromagnetischen und akustischen Signalen auf der Grundlage von empfangenen elektromagnetischen und akustischen Signalen ausgesendet werden.

Hierbei kann es bevorzugt sein, dass sich die Recheneinheit **9** in der Vorrichtung **10** selbst befindet und alle Rechenschritte, beispielsweise zur Bestimmung der Position, von dieser Recheneinheit durchgeführt werden. Es kann aber auch bevorzugt sein, dass insbesondere die rechenintensiven Schritte über ein Netzwerk, beispielsweise über eine Cloud (nicht abgebildet), erfolgen.

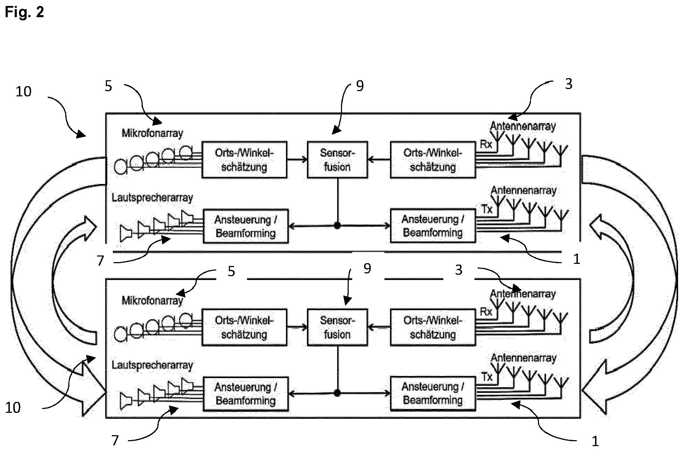

**Fig. 2** zeigt eine schematische Darstellung einer bevorzugten Ausführungsform des erfindungsgemäßen Systems. Das System umfasst zwei oder mehr der erfindungsgemäßen Vorrichtungen **10**. Das System ist also als ein Verbund der erfindungsgemäßen Vorrichtungen **10** zu sehen, welches seine Fähigkeiten vereinigt, um mehr Funktionalität zu bieten als lediglich die Summe der Einzelvorrichtungen, aus denen es besteht. Die Vorrichtungen **10** sind bevorzugt ihrerseits vollständig autark nutzbar, d.h. sie können auch unabhängig voneinander in Betrieb gehen und genutzt werden, wobei bevorzugt ein Informations- oder Datenaustausch zwischen den Vorrichtungen vorgesehen ist.

Insbesondere kann das System dafür eingesetzt werden, die Position von mehreren Nutzern mit einer hohen Genauigkeit zu bestimmen. Auch in Bezug auf das Aussenden von Antischall-Signalen ist das System vorteilhaft, da insbesondere Störschall aus mehreren verschiedenen Quellen gedämpft und/oder gesenkt werden kann. Zudem kann es bevorzugt sein, dass durch die Lautsprecherarrays empfangene akustische Signale sich selbst überlagern, um großen Störschall zu verringern.

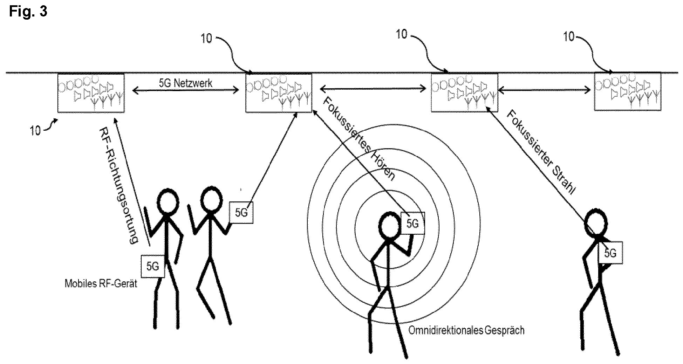

**Fig. 3** zeigt eine schematische Darstellung des Systems umfassend zwei oder mehr Vorrichtungen **10**, wie es an einer Decke, beispielsweise innerhalb eines Raumes oder eines Büros angeracht ist. Die Vorrichtungen **10** und/oder das System sind geeignet, sich mit dem 5G-Netz zu verbinden, insbesondere durch die Antennenarrays, da sie in den entsprechenden Frequenzbereichen elektromagnetische Signale senden und/oder empfangen kann. Insbesondere können durch Beamforming elektromagnetische Signale gezielt an Nutzer und/oder Objekte gesendet werden, sodass fokussiert gehört werden kann. Die Vorrichtungen **10** können bevorzugt in einem Abstand zwischen 1 - 10 m voneinander an einer Decke angebracht werden. Zudem können vorteilhafterweise die Positionen von mehreren Nutzern und/oder Objekten mit hoher Genauigkeit bestimmt werden.

### BEZUGSZEICHENLISTE

- 1: Erstes Antennenarray zum Senden von elektromagnetischen Signalen
- 3: Zweites Antennenarray zum Empfangen von elektromagnetischen Signalen
- 5: Mikrofonarray zum Empfangen von akustischen Signalen
- 7: Lautsprecherarray zum Senden von akustischen Signalen
- 9: Recheneinheit
- 10: Vorrichtung

### LITERATURVERZEICHNIS

Headland, Daniel, et al. "Tutorial: Terahertz beamforming, from concepts to realizations." Apl Photonics 3.5 (2018): 051101.
Naqvi, Aqeel Hussain, and Sungjoon Lim. "Review of recent phased arrays for millimeter-wave wireless communication." Sensors 18.10 (2018): 3194.
Vossiek, Martin, et al. "Wireless local positioning."IEEE microwave magazine 4.4 (2003): 77-86.
Izquierdo, Alberto, et al. "Design and evaluation of a scalable and reconfigurable multi-platform system for acoustic imaging." Sensors 16.10 (2016): 1671.
Anzinger, Sebastian, et al. "Low power capacitive ultrasonic transceiver array for airborne object detection." 2020 IEEE 33rd International Conference on Micro Electro Mechanical Systems (MEMS). IEEE, 2020.
Papež, Martin, and Karel Vlček. "Enhanced MVDR beamforming for mems microphone array." Vol 2 (2015): 42-46.
Birth, Martin. "Robuste Parameterschätzung für DS-Beamforming in einem dreidimensionalen Mikrofonfeld." (2016, Masterarbeit, BTU Cottbus)

## Patentansprüche

1. Vorrichtung (10) zum Senden, Empfangen und Verarbeiten von elektromagnetischen und akustischen Signalen umfassend einem ersten Antennenarray (1) zum Senden von elektromagnetischen Signalen, einem zweiten Antennenarray (3) zum Empfangen von elektromagnetischen Signalen, einem Mikrofonarray (5) zum Empfangen von akustischen Signalen, einem Lautsprecherarray (7) zum Senden von akustischen Signalen und einer Recheneinheit (9),
**dadurch gekennzeichnet, dass**
die Recheneinheit (9) dazu konfiguriert ist, dass
- ein Senden und/oder Empfangen von akustischen Signalen durch die Vorrichtung (10) mittels Beamforming erfolgt, wobei für das Beamforming eine Verarbeitung von empfangenen elektromagnetischen Signalen vorgenommen wird,
- ein Senden und/oder Empfangen von elektromagnetischen Signalen durch die Vorrichtung (10) mittels Beamforming erfolgt, wobei für das Beamforming eine Verarbeitung von empfangenen akustischen Signalen vorgenommen wird und/oder
- ein Senden und/oder Empfangen von elektromagnetischen und/oder akustischen Signalen durch die Vorrichtung (10) mittels Beamforming erfolgt, wobei für das Beamforming eine Verarbeitung von empfangenen akustischen und elektromagnetischen Signalen vorgenommen wird.

2. Vorrichtung (10) gemäß einem oder mehreren der vorherigen Ansprüche
**dadurch gekennzeichnet, dass**
die Vorrichtung (10) eine Lokalisierung von Objekten und/oder Nutzern über die empfangenen und/oder gesendeten elektromagnetischen und akustischen Signale vornimmt.

3. Vorrichtung (10) gemäß einem oder mehreren der vorherigen Ansprüche
**dadurch gekennzeichnet, dass**
die gesendeten und/oder empfangenen akustischen Signale für eine Grobschätzung und die gesendeten und/oder empfangenen elektromagnetischen Signale eine Feinschätzung der Lokalisierung genutzt werden.

4. Vorrichtung (10) gemäß einem oder mehreren der vorherigen Ansprüche
**dadurch gekennzeichnet, dass**
die Vorrichtung für ein Senden und/oder Empfangen eines Pilotsignales konfiguriert ist, welches bevorzugt eine Lokalisierung der Objekte und/oder Nutzer unterstützen kann.

5. Vorrichtung (10) gemäß einem oder mehreren der vorherigen Ansprüche
**dadurch gekennzeichnet, dass**
das Mikrofonarray (5) zum Empfang akustischer Signale innerhalb eines Frequenzbereiches zwischen 10Hz - 100 kHz, bevorzugt 20Hz - 20 kHz eingerichtet ist und das Lautsprecherarray (7) für ein Senden akustischer Signale innerhalb eines Frequenzbereiches zwischen 10 Hz - 100 kHz, bevorzugt 20Hz - 20 kHz eingerichtet ist.

6. Vorrichtung (10) gemäß einem oder mehreren der vorherigen Ansprüche
**dadurch gekennzeichnet, dass**
das erste (1) und/oder zweite Antennenarray (3) zum Senden und/oder Empfangen von elektromagnetischen Signalen innerhalb eines Frequenzbereiches zwischen 1 MHz und 10 THz, vorzugsweise 150 MHz und 80 GHz konfiguriert ist.

7. Vorrichtung (10) gemäß einem oder mehreren der vorherigen Ansprüche,
**dadurch gekennzeichnet, dass**
das Mikrofonarray (5) und/oder das Lautsprecherarray (7) auf MEMS-Technologie basiert.

8. Vorrichtung (10) gemäß einem oder mehreren der vorherigen Ansprüche
**dadurch gekennzeichnet, dass**
das Antennenarray zum Empfangen (3) und/oder Senden (1) von elektromagnetischen Signalen Phased-Array Antennen und/oder Smart Reflektoren umfasst.

9. Vorrichtung (10) gemäß einem oder mehreren der vorherigen Ansprüche
**dadurch gekennzeichnet, dass**
das Mikrofonarray (5), das Lautsprecherarray () und die Antennenarrays (1,3) innerhalb eines Moduls eingebaut vorliegen, wobei das Modul bevorzugt eine Dimension von 1 cm - 100 cm aufweist.

10. Vorrichtung (10) gemäß einem oder mehreren der vorherigen Ansprüche
**dadurch gekennzeichnet, dass**
die Vorrichtung (10) akustischen Signale zur Geräuschkompensation aussendet.

11. System umfassend zwei oder mehr der Vorrichtungen (10) gemäß einem der vorherigen Ansprüche.

12. System gemäß dem vorherigen Anspruch
**dadurch gekennzeichnet, dass**
dass das System 2, 3, 4, 5, 10 oder 20 mehr Vorrichtungen (10) umfasst, wobei die Vorrichtungen (10) bevorzugt in einem Abstand von 1 m bis 10 m angeordnet vorliegen.

13. System gemäß einem oder mehreren der vorherigen Ansprüche 11-12
**dadurch gekennzeichnet, dass**
das System an einer Wand und/oder Decke innerhalb eines Raums, bevorzugt eines Büros, besonders bevorzugt innerhalb eines Großraumbüros angebracht ist.

14. System gemäß einem oder mehreren der vorherigen Ansprüche 11-13
**dadurch gekennzeichnet, dass**
Reflektoren für elektromagnetische und/oder akustische Strahlung an einem Objekt, Nutzer und/oder einer Fixposition in einem Raum, beispielsweise an einer Wand oder einer Decke, angebracht sind.

15. Verfahren zum Senden, Empfangen und Verarbeiten von elektromagnetischen und akustischen Signalen mit Hilfe einer Vorrichtung (10) gemäß einem oder mehreren der Ansprüche 1-10 oder einem System gemäß einem oder mehreren der Ansprüche 11-14 **dadurch gekennzeichnet, dass**
- ein Senden und/oder Empfangen von akustischen Signalen durch die Vorrichtung (10) oder das System mittels Beamforming erfolgt, wobei für das Beamforming eine Verarbeitung von empfangenen elektromagnetischen Signalen vorgenommen wird,
- ein Senden und/oder Empfangen von elektromagnetischen Signalen durch die Vorrichtung (10) oder das System mittels Beamforming erfolgt, wobei für das Beamforming eine Verarbeitung von empfangenen akustischen Signalen vorgenommen wird und/oder
- ein Senden und/oder Empfangen von elektromagnetischen und/oder akustischen Signalen durch die Vorrichtung oder das System mittels Beamforming erfolgt, wobei für das Beamforming eine Verarbeitung von empfangenen akustischen und elektromagnetischen Signalen vorgenommen wird.
